(19) 

Europäisches
Patentamt
European
Patent Office
Office européen
des brevets

(11) **EP 4 090 089 A1**

(12) **EUROPEAN PATENT APPLICATION**
published in accordance with Art. 153(4) EPC

(43) Date of publication:
**16.11.2022 Bulletin 2022/46**

(21) Application number: **21753676.2**

(22) Date of filing: **08.02.2021**

(51) International Patent Classification (IPC):
*H04W 56/00* (2009.01)      *H04W 72/14* (2009.01)
*H04W 72/12* (2009.01)      *H04W 72/04* (2009.01)
*H04W 4/40* (2018.01)      *H04W 92/18* (2009.01)

(52) Cooperative Patent Classification (CPC):
**H04W 4/40; H04W 56/00; H04W 72/04;
H04W 72/12; H04W 72/14; H04W 92/18**

(86) International application number:
**PCT/KR2021/001602**

(87) International publication number:
**WO 2021/162370 (19.08.2021 Gazette 2021/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.02.2020   US 202062975745 P
14.02.2020   US 202062977093 P
14.02.2020   US 202062977110 P
23.02.2020   US 202062980435 P
01.03.2020   US 202062983750 P
05.08.2020   KR 20200097886**

(71) Applicant: **LG Electronics Inc.**
**Seoul 07336 (KR)**

(72) Inventors:
• **KO, Woosuk**
  **Seoul 06772 (KR)**
• **LEE, Seungmin**
  **Seoul 06772 (KR)**
• **SEO, Hanbyul**
  **Seoul 06772 (KR)**
• **HWANG, Daesung**
  **Seoul 06772 (KR)**

(74) Representative: **Maikowski & Ninnemann
Patentanwälte Partnerschaft mbB
Postfach 15 09 20
10671 Berlin (DE)**

(54) **METHOD AND APPARATUS FOR PERFORMING SIDELINK COMMUNICATION ON BASIS OF SIDELINK CG RESOURCES IN NR V2X**

(57)    According to an embodiment of the present disclosure, provided is a method for performing wireless communication by a first apparatus. The method may comprise the steps of: receiving, from a base station, RRC configuration information about sidelink CG resources; transmitting a PSCCH to a second apparatus via a sidelink transmission resource determined on the basis of the RRC configuration information; and transmitting, to the second apparatus via the sidelink transmission resource, a PSSCH associated with the PSCCH.

FIG. 15

receive RRC configuration information related
to sidelink CG resource from base station — S1510

transmit PSCCH to second device through sidelink
transmission resource determined
based on RRC configuration information — S1520

transmit PSSCH related to PSCCH to second device
through sidelink transmission resource — S1530

EP 4 090 089 A1

**Description**

**BACKGROUND OF THE DISCLOSURE**

Field of the disclosure

This disclosure relates to a wireless communication system.

Related Art

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic.

Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

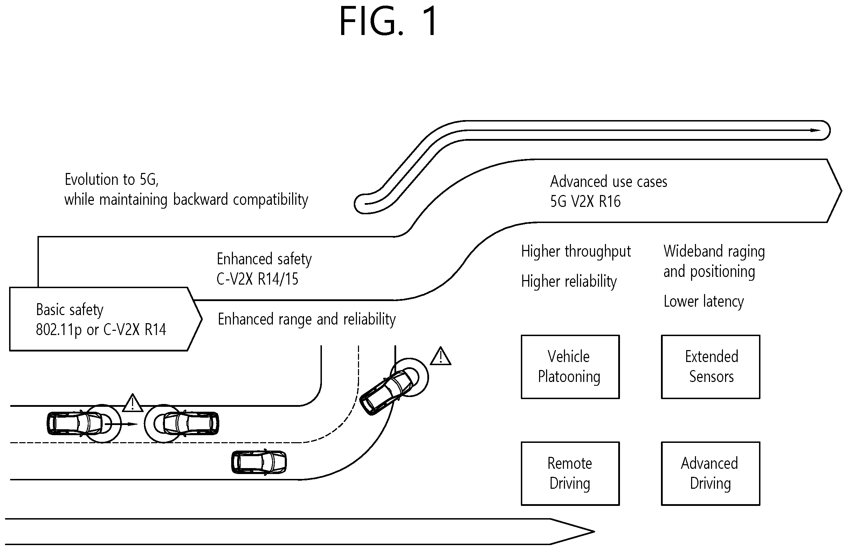

FIG. 1 is a drawing for describing V2X communication based on NR, compared to V2X communication based on RAT used before NR. The embodiment of FIG. 1 may be combined with various embodiments of the present disclosure.

Regarding V2X communication, a scheme of providing a safety service, based on a V2X message such as Basic Safety Message (BSM), Cooperative Awareness Message (CAM), and Decentralized Environmental Notification Message (DENM) is focused in the discussion on the RAT used before the NR. The V2X message may include position information, dynamic information, attribute information, or the like. For example, a UE may transmit a periodic message type CAM and/or an event triggered message type DENM to another UE.

For example, the CAM may include dynamic state information of the vehicle such as direction and speed, static data of the vehicle such as a size, and basic vehicle information such as an exterior illumination state, route details, or the like. For example, the UE may broadcast the CAM, and latency of the CAM may be less than 100ms. For example, the UE may generate the DENM and transmit it to another UE in an unexpected situation such as a vehicle breakdown, accident, or the like. For example, all vehicles within a transmission range of the UE may receive the CAM and/or the DENM. In this case, the DENM may have a higher priority than the CAM

Thereafter, regarding V2X communication, various V2X scenarios are proposed in NR For example, the various V2X scenarios may include vehicle platooning, advanced driving, extended sensors, remote driving, or the like.

For example, based on the vehicle platooning, vehicles may move together by dynamically forming a group. For example, in order to perform platoon operations based on the vehicle platooning, the vehicles belonging to the group may receive periodic data from a leading vehicle. For example, the vehicles belonging to the group may decrease or increase an interval between the vehicles by using the periodic data.

For example, based on the advanced driving, the vehicle may be semi-automated or fully automated. For example, each vehicle may adjust trajectories or maneuvers, based on data obtained from a local sensor of a proximity vehicle and/or a proximity logical entity. In addition, for example, each vehicle may share driving intention with proximity vehicles.

For example, based on the extended sensors, raw data, processed data, or live video data obtained through the local sensors may be exchanged between a vehicle, a logical entity, a UE of pedestrians, and/or a V2X application server. Therefore, for example, the vehicle may recognize a more improved environment than an environment in which a self-sensor is used for detection.

For example, based on the remote driving, for a person who cannot drive or a remote vehicle in a dangerous environment, a remote driver or a V2X application may operate or control the remote vehicle. For example, if a route is predictable such as public transportation, cloud computing based driving may be used for the operation or control of the remote vehicle. In addition, for example, an access for a cloud-based back-end service platform may be considered for the remote driving.

Meanwhile, a scheme of specifying service requirements for various V2X scenarios such as vehicle platooning, advanced driving, extended sensors, remote driving, or the like is discussed in NR-based V2X communication.

## SUMMARY OF THE DISCLOSURE

Technical Objects

The present disclosure provides a method for communication between devices (or UEs) based on V2X communication, and device(s) (or UE(s)) performing the method.

The present disclosure provides a method for determining a sidelink configured grant (CG) resource based on Radio Resource Control (RRC) configuration information received from a base station in NR V2X and device(s) (or UE(s)) performing the method.

Technical Solutions

In an embodiment, provided is a method for performing wireless communication by a first device. The method may comprise: receiving, from a base station, Radio Resource Control (RRC) configuration information related to a sidelink Configured Grant (CG) resource; transmitting, to a second device, a Physical Sidelink Control Channel (PSCCH) through a sidelink transmission resource determined based on the RRC configuration information; and transmitting, to the second device, a Physical Sidelink Shared Channel (PSSCH) related to the PSCCH through the sidelink transmission resource, wherein the RRC configuration information includes a timing offset for determining a first sidelink CG slot and a sidelink resource period of sidelink CG slots periodically allocated by the base station, and wherein the sidelink transmission resource is determined based on the timing offset and the sidelink resource period in a unit of a logical slot.

In an embodiment, provided is a first device configured to perform wireless communication. The first device may comprise: at least one memory storing instructions; at least one transceiver; and at least one processor connected to the at least one memory and the at least one transceiver, wherein the at least one processor executes the instructions to: control the at least one transceiver to receive, from a base station, Radio Resource Control (RRC) configuration information related to a sidelink Configured Grant (CG) resource; control the at least one transceiver to transmit, to a second device, a Physical Sidelink Control Channel (PSCCH) through a sidelink transmission resource determined based on the RRC configuration information; and control the at least one transceiver to transmit, to the second device, a Physical Sidelink Shared Channel (PSSCH) related to the PSCCH through the sidelink transmission resource, wherein the RRC configuration information includes a timing offset for determining a first sidelink CG slot and a sidelink resource period of sidelink CG slots periodically allocated by the base station, and wherein the sidelink transmission resource is determined based on the timing offset and the sidelink resource period in a unit of a logical slot.

In an embodiment, provided is an apparatus (or a chip(set)) configured to control a first user equipment (UE). The apparatus may comprise: at least one processor; and at least one memory connected to the at least one processor and storing instructions, wherein the at least one processor executes the instructions to: receive, from a base station, Radio Resource Control (RRC) configuration information related to a sidelink Configured Grant (CG) resource; transmit, to a second device, a Physical Sidelink Control Channel (PSCCH) through a sidelink transmission resource determined based on the RRC configuration information; and transmit, to the second device, a Physical Sidelink Shared Channel (PSSCH) related to the PSCCH through the sidelink transmission resource, wherein the RRC configuration information includes a timing offset for determining a first sidelink CG slot and a sidelink resource period of sidelink CG slots periodically allocated by the base station, and wherein the sidelink transmission resource is determined based on the timing offset and the sidelink resource period in a unit of a logical slot.

In an embodiment, provided is a non-transitory computer-readable storage medium storing instructions (or commands). The non-transitory computer-readable storage medium, when the instructions are executed, causes a first device to: receive, from a base station, Radio Resource Control (RRC) configuration information related to a sidelink Configured Grant (CG) resource; transmit, to a second device, a Physical Sidelink Control Channel (PSCCH) through a sidelink transmission resource determined based on the RRC configuration information; and transmit, to the second device, a Physical Sidelink Shared Channel (PSSCH) related to the PSCCH through the sidelink transmission resource, wherein the RRC configuration information includes a timing offset for determining a first sidelink CG slot and a sidelink resource period of sidelink CG slots periodically allocated by the base station, and wherein the sidelink transmission resource is determined based on the timing offset and the sidelink resource period in a unit of a logical slot.

In an embodiment, provided is a method for performing wireless communication by a second device. The method may comprise: receiving, from a first device, a PSCCH through a sidelink transmission resource determined based on RRC configuration information related to a sidelink CG resource; and receiving, from the first device, a PSSCH related to the PSCCH through the sidelink transmission resource, wherein the RRC configuration information is transmitted from the base station and received by the first device, wherein the RRC configuration information includes a timing offset for determining a first sidelink CG slot and a sidelink resource period of sidelink CG slots periodically allocated by the base station, and wherein the sidelink transmission resource is determined in a unit of a logical slot based on the timing offset and the sidelink resource period.

In an embodiment, provided is a second device configured to perform wireless communication. The second device may comprise: at least one memory storing instructions; at least one transceiver; and at least one processor connected to the at least one memory and the at least one transceiver, wherein the at least one processor executes the instructions to: control the at least one transceiver to receive, from a first device, a PSCCH through a sidelink transmission resource determined based on RRC configuration information related to a sidelink CG resource; and control the at least one transceiver to receive, from the first device, a PSSCH related to the PSCCH through the sidelink transmission resource, wherein the RRC configuration information is transmitted from the base station and received by the first device, wherein the RRC configuration information includes a timing offset for determining a first sidelink CG slot and a sidelink resource period of sidelink CG slots periodically allocated by the base station, and wherein the sidelink transmission resource is determined in a unit of a logical slot based on the timing offset and the sidelink resource period.

## EFFECTS OF THE DISCLOSURE

Based on the present disclosure, V2X communication between devices (or UEs) can be efficiently performed.

Based on the present disclosure, it is possible to efficiently determine the sidelink CG resource based on the RRC configuration information received from the base station in NR

V2X.

Based on the present disclosure, the first device can determine the sidelink transmission resource in the unit of the logical slot based on the timing offset and the sidelink resource period included in the RRC configuration information received from the base station.

## BRIEF DESCRIPTION OF THE DRAWINGS

FIG. 1 is a drawing for describing V2X communication based on NR, compared to V2X communication based on RAT used before NR

FIG. 2 shows a structure of an NR system, based on an embodiment of the present disclosure.

FIG. 3 shows a functional division between an NG-RAN and a 5GC, based on an embodiment of the present disclosure.

FIGs. 4A and 4B show a radio protocol architecture, based on an embodiment of the present disclosure.

FIG. 5 shows a structure of an NR system, based on an embodiment of the present disclosure.

FIG. 6 shows a structure of a slot of an NR frame, based on an embodiment of the present disclosure.

FIG. 7 shows an example of a BWP, based on an embodiment of the present disclosure.

FIGs. 8A and 8B show a radio protocol architecture for a SL communication, based on an embodiment of the present disclosure.

FIG. 9 shows a UE performing V2X or SL communication, based on an embodiment of the present disclosure.

FIGs. 10A and 10B show a procedure of performing V2X or SL communication by a UE based on a transmission mode, based on an embodiment of the present disclosure.

FIGs. 11A to 11C show three cast types, based on an embodiment of the present disclosure.

FIG. 12 shows an example in which a first device reports sidelink HARQ ACK for sidelink CG to a base station on a PUCCH.

FIG. 13 shows an example of PSFCH-to-PUCCH transmission timing in synchronous case and asynchronous case.

FIG. 14 shows an example of a procedure in which a base station, a first device, and a second device perform wireless communication, based on an embodiment of the present disclosure.

FIG. 15 is a flowchart illustrating an operation of a first device, based on an embodiment of the present disclosure.

FIG. 16 is a flowchart illustrating an operation of a second device, based on an embodiment of the present disclosure.

FIG. 17 shows a communication system 1, based on an embodiment of the present disclosure.

FIG. 18 shows wireless devices, based on an embodiment of the present disclosure.

FIG. 19 shows a signal process circuit for a transmission signal, based on an embodiment of the present disclosure.

FIG. 20 shows another example of a wireless device, based on an embodiment of the present disclosure.

FIG. 21 shows a hand-held device, based on an embodiment of the present disclosure.

FIG. 22 shows a vehicle or an autonomous vehicle, based on an embodiment of the present disclosure.

**DESCRIPTION OF EXEMPLARY EMBODIMENTS**

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

A technical feature described individually in one figure in the present disclosure may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

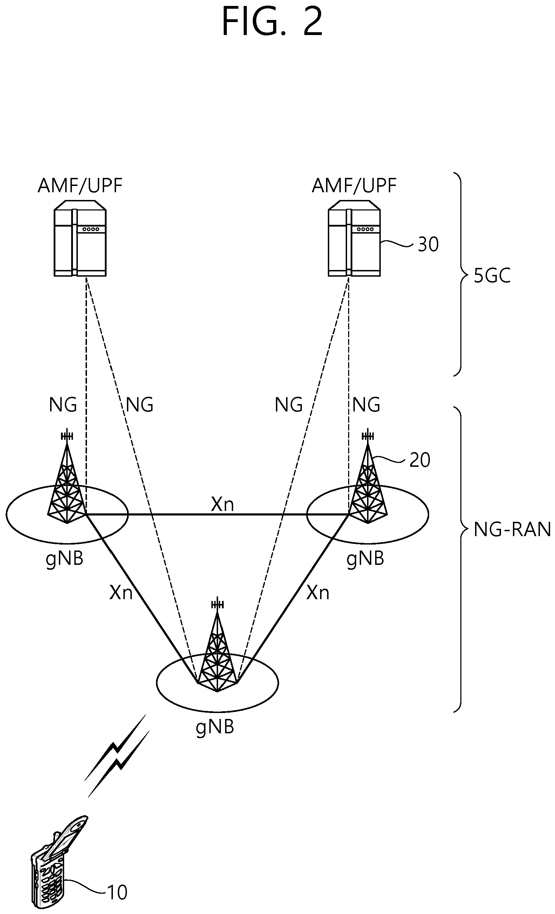

FIG. 2 shows a structure of an NR system, based on an embodiment of the present disclosure. The embodiment of FIG. 2 may be combined with various embodiments of the present disclosure.

Referring to FIG. 2, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 2 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

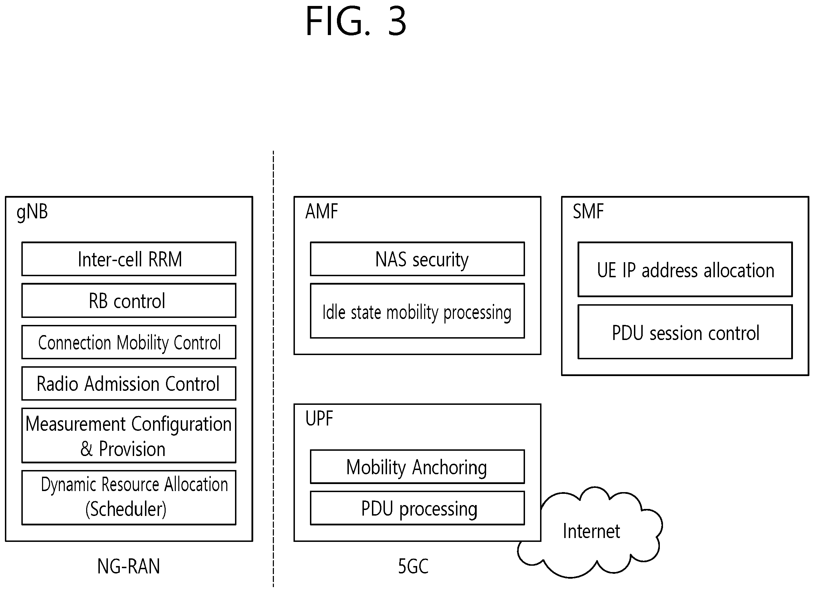

FIG. 3 shows a functional division between an NG-RAN and a 5GC, based on an embodiment of the present disclosure. The embodiment of FIG. 3 may be combined with various embodiments of the present disclosure.

Referring to FIG. 3, the gNB may provide functions, such as Inter Cell Radio Resource Management (RRM), Radio Bearer (RB) control, Connection Mobility Control, Radio Admission Control, Measurement Configuration & Provision, Dynamic Resource Allocation, and so on. An AMF may provide functions, such as Non Access Stratum (NAS) security, idle state mobility processing, and so on. A UPF may provide functions, such as Mobility Anchoring, Protocol Data Unit (PDU) processing, and so on. A Session Management Function (SMF) may provide functions, such as user equipment (UE) Internet Protocol (IP) address allocation, PDU session control, and so on.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

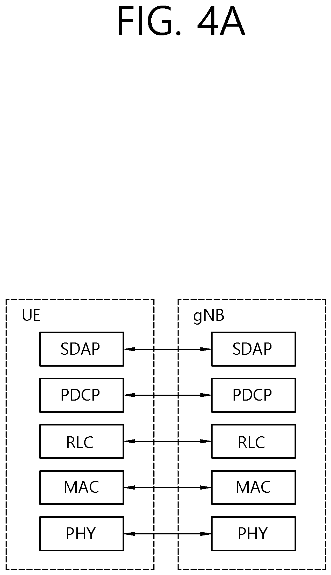

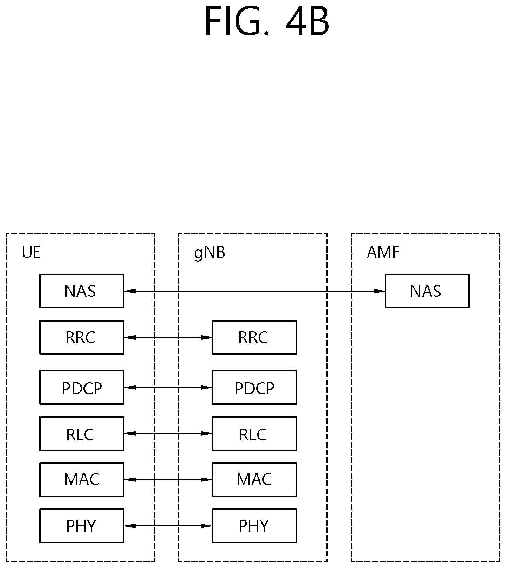

FIGs. 4A and 4B show a radio protocol architecture, based on an embodiment of the present disclosure. The embodiment of FIGs. 4A and 4B may be combined with various embodiments of the present disclosure. Specifically, FIG. 4A shows a radio protocol architecture for a user plane, and FIG. 4B shows a radio protocol architecture for a control plane. The user plane corresponds to a protocol stack for user data transmission, and the control plane corresponds to a protocol stack for control signal transmission.

Referring to FIGs. 4A and 4B, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., the MAC layer, the RLC layer, and the packet data convergence protocol (PDCP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

The physical channel includes several OFDM symbols in a time domain and several sub-carriers in a frequency domain. One sub-frame includes a plurality of OFDM symbols in the time domain. A resource block is a unit of resource allocation, and consists of a plurality of OFDM symbols and a plurality of sub-carriers. Further, each subframe may use specific sub-carriers of specific OFDM symbols (e.g., a first OFDM symbol) of a corresponding subframe for a physical downlink control channel (PDCCH), i.e., an L1/L2 control channel. A transmission time interval (TTI) is a unit time of subframe transmission.

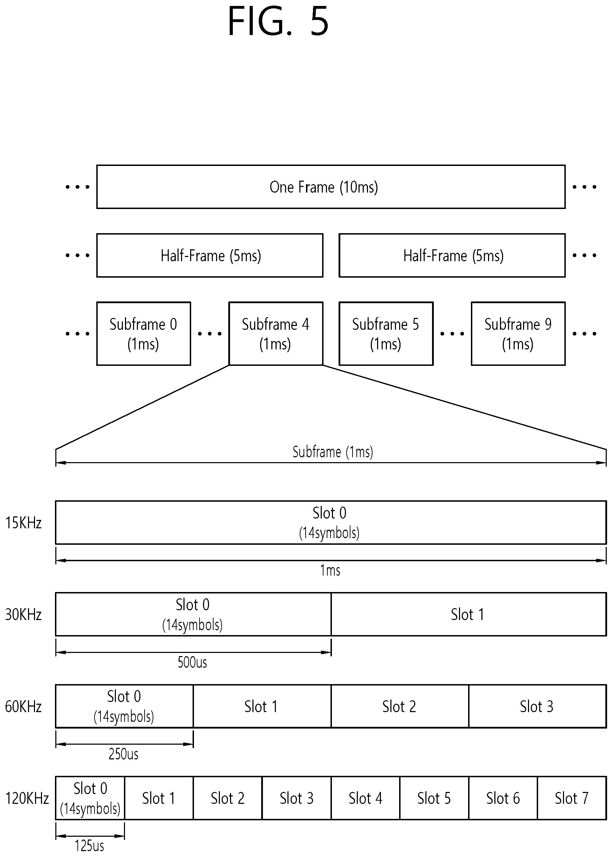

FIG. 5 shows a structure of an NR system, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{Symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
| --- | --- | --- |
| FR1 | 410MHz - 7125MHz | 15, 30, 60kHz |
| FR2 | 24250MHz - 52600MHz | 60, 120, 240kHz |

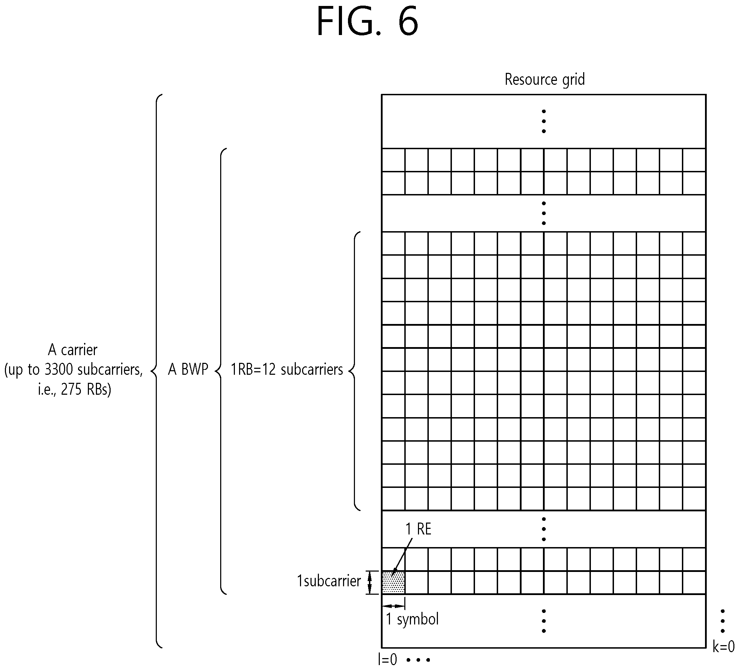

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Meanwhile, a radio interface between a UE and another UE or a radio interface between the UE and a network may consist of an L1 layer, an L2 layer, and an L3 layer. In various embodiments of the present disclosure, the L1 layer may imply a physical layer. In addition, for example, the L2 layer may imply at least one of a MAC layer, an RLC layer, a PDCP layer, and an SDAP layer. In addition, for example, the L3 layer may imply an RRC layer.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier.

When using bandwidth adaptation (BA), a reception bandwidth and transmission bandwidth of a UE are not necessarily as large as a bandwidth of a cell, and the reception bandwidth and transmission bandwidth of the BS may be adjusted. For example, a network/BS may inform the UE of bandwidth adjustment. For example, the UE receive information/configuration for bandwidth adjustment from the network/BS. In this case, the UE may perform bandwidth adjustment based on the received information/configuration. For example, the bandwidth adjustment may include an increase/decrease of the bandwidth, a position change of the bandwidth, or a change in subcarrier spacing of the bandwidth.

For example, the bandwidth may be decreased during a period in which activity is low to save power. For example, the position of the bandwidth may move in a frequency domain. For example, the position of the bandwidth may move in the frequency domain to increase scheduling flexibility. For example, the subcarrier spacing of the bandwidth may be changed. For example, the subcarrier spacing of the bandwidth may be changed to allow a different service. A subset of a total cell bandwidth of a cell may be called a bandwidth part (BWP). The BA may be performed when the BS/network configures the BWP to the UE and the BS/network informs the UE of the BWP currently in an active state among the configured BWPs.

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

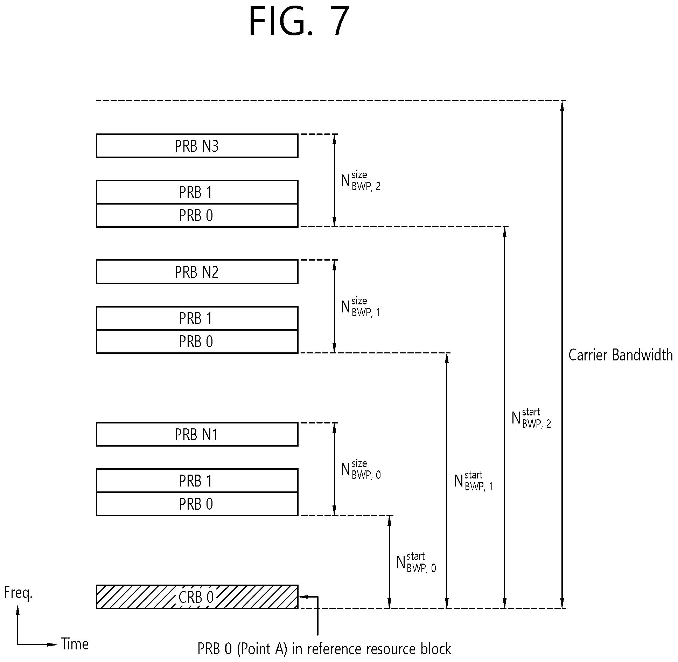

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

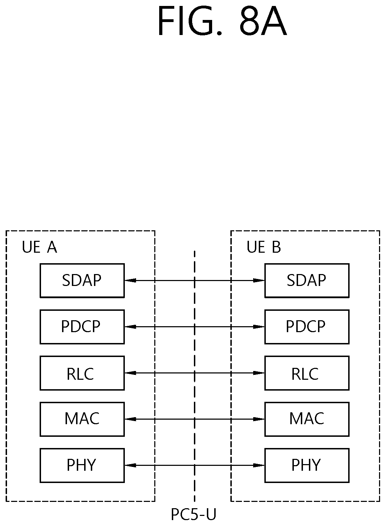

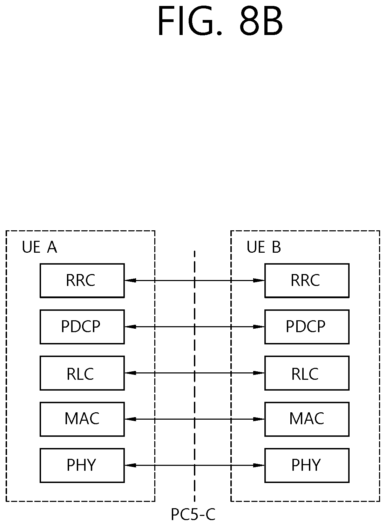

FIGs. 8A and 8B show a radio protocol architecture for a SL communication, based on an embodiment of the present disclosure. The embodiment of FIGs. 8A and 8B may be combined with various embodiments of the present disclosure. More specifically, FIG. 8A shows a user plane protocol stack, and FIG. 8B shows a control plane protocol stack.

Hereinafter, a sidelink synchronization signal (SLSS) and synchronization information will be described.

The SLSS may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit CRC.

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

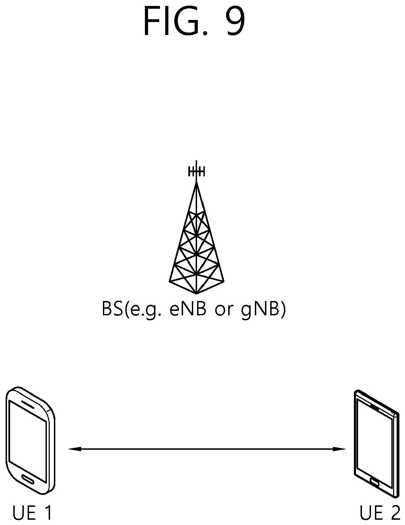

FIG. 9 shows a UE performing V2X or SL communication, based on an embodiment of the present disclosure. The embodiment of FIG. 9 may be combined with various embodiments of the present disclosure.

Referring to FIG. 9, in V2X or SL communication, the term 'UE' may generally imply a UE of a user. However, if a network equipment such as a BS transmits/receives a signal according to a communication scheme between UEs, the BS may also be regarded as a sort of the UE. For example, a UE 1 may be a first apparatus 100, and a UE 2 may be a second apparatus 200.

For example, the UE 1 may select a resource unit corresponding to a specific resource in a resource pool which implies a set of series of resources. In addition, the UE 1 may transmit an SL signal by using the resource unit. For example, a resource pool in which the UE 1 is capable of transmitting a signal may be configured to the UE 2 which is a receiving UE, and the signal of the UE 1 may be detected in the resource pool.

Herein, if the UE 1 is within a connectivity range of the BS, the BS may inform the UE 1 of the resource pool. Otherwise, if the UE 1 is out of the connectivity range of the BS, another UE may inform the UE 1 of the resource pool, or the UE 1 may use a pre-configured resource pool.

In general, the resource pool may be configured in unit of a plurality of resources, and each UE may select a unit of one or a plurality of resources to use it in SL signal transmission thereof.

Hereinafter, resource allocation in SL will be described.

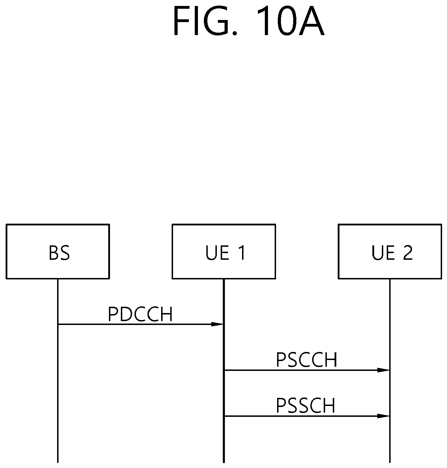

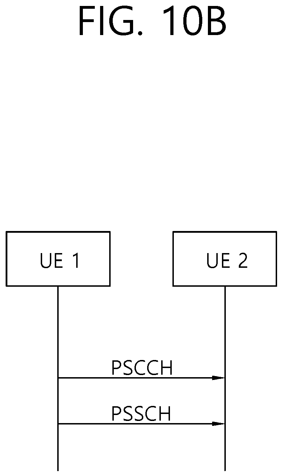

FIGs. 10A and 10B show a procedure of performing V2X or SL communication by a UE based on a transmission mode, based on an embodiment of the present disclosure. The embodiment of FIGs. 10A and 10B may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, FIG. 10A shows a UE operation related to an LTE transmission mode 1 or an LTE transmission mode 3. Alternatively, for example, FIG. 10A shows a UE operation related to an NR resource allocation mode 1. For example, the LTE transmission mode 1 may be applied to general SL communication, and the LTE transmission mode 3 may be applied to V2X communication.

For example, FIG. 10B shows a UE operation related to an LTE transmission mode 2 or an LTE transmission mode 4. Alternatively, for example, FIG. 10B shows a UE operation related to an NR resource allocation mode 2.

Referring to FIG. 10A, in the LTE transmission mode 1, the LTE transmission mode 3, or the NR resource allocation mode 1, a BS may schedule an SL resource to be used by the UE for SL transmission. For example, the BS may perform resource scheduling to a UE 1 through a PDCCH (more specifically, downlink control information (DCI)), and the UE 1may perform V2X or SL communication with respect to a UE 2 according to the resource scheduling. For example, the UE 1 may transmit a sidelink control information (SCI) to the UE 2 through a physical sidelink control channel (PSCCH), and thereafter transmit data based on the SCI to the UE 2 through a physical sidelink shared channel (PSSCH).

Referring to FIG. 10B, in the LTE transmission mode 2, the LTE transmission mode 4, or the NR resource allocation mode 2, the UE may determine an SL transmission resource within an SL resource configured by a BS/network or a pre-configured SL resource. For example, the configured SL resource or the pre-configured SL resource may be a resource pool. For example, the UE may autonomously select or schedule a resource for SL transmission. For example, the UE may perform SL communication by autonomously selecting a resource within a configured resource pool. For example, the UE may autonomously select a resource within a selective window by performing a sensing and resource (re)selection procedure. For example, the sensing may be performed in unit of subchannels. In addition, the UE 1 which has autonomously selected the resource within the resource pool may transmit the SCI to the UE 2 through a PSCCH, and thereafter may transmit data based on the SCI to the UE 2 through a PSSCH.

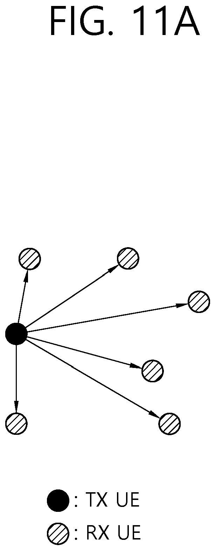

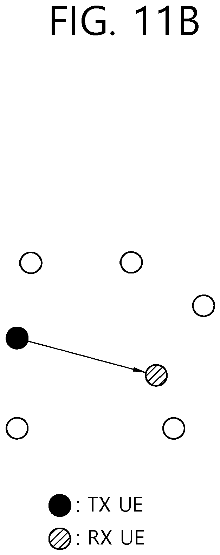

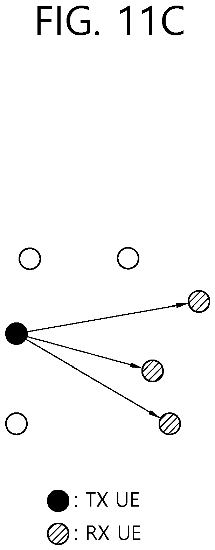

FIGs. 11A to 11C show three cast types, based on an embodiment of the present disclosure. The embodiment of FIGs. 11A to 11C may be combined with various embodiments of the present disclosure. Specifically, FIG. 11A shows broadcast-type SL communication, FIG. 11B shows unicast type-SL communication, and FIG. 11C shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Meanwhile, in SL communication, a UE needs to efficiently select resource(s) for SL transmission. Hereinafter, based on various embodiments of the present disclosure, a method for a UE to efficiently select resource(s) for SL transmission and an apparatus supporting the same will be described. In various embodiments of the present disclosure, SL communication may include V2X communication.

At least one of the methods that are proposed based on the various embodiments of the present disclosure may be applied to at least one of unicast communication, groupcast communication, and/or broadcast communication.

At least one of the methods that are proposed based on the various embodiments of the present disclosure may be applied not only to PC5 interface or SL interface (e.g., PSCCH, PSSCH, PSBCH, PSSS/SSSS, and so on) based SL communication or V2X communication but also to Uu interface (e.g., PUSCH, PDSCH, PDCCH, PUCCH, and so on) based SL communication or V2X communication.

In the various embodiments of the present disclosure, receiving operation(s) of the UE may include decoding operation(s) and/or receiving operation(s) of SL channel(s) and/or SL signal(s) (e.g., PSCCH, PSSCH, PSFCH, PSBCH, PSSS/SSSS, and so on). Receiving operation(s) of the UE may include decoding operation(s) and/or receiving operation(s) of WAN DL channel(s) and/or WAN DL signal(s) (e.g., PDCCH, PDSCH, PSS/SSS, and so on). Receiving operation(s) of the UE may include sensing operation(s) and/or channel busy ratio (CBR) measuring operation(s). In the various embodiments of the present disclosure, sensing operation(s) of the UE may include PSSCH-RSRP measuring operation(s) based on PSSCH DM-RS sequence(s), PSSCH-RSRP measuring operation(s) based on PSSCH DM-RS sequence(s), which is scheduled by a PSCCH that is successfully decoded by the UE, sidelink RSSI (S-RSSI) measuring operation(s), and/or S-RSSI measuring operation(s) based on subchannel(s) related to V2X resource pool(s). In the various embodiments of the present disclosure, transmitting operation(s) of the UE may include transmitting operation(s) of SL channel(s) and/or SL signal(s) (e.g., PSCCH, PSSCH, PSFCH, PSBCH, PSSS/SSSS, and so on). Transmitting operation(s) may include transmitting operation(s) of WAN UL channel(s) and/or WAN UL signal(s) (e.g., PUSCH, PUCCH, SRS, and so on). In the various embodiments of the present disclosure, a synchronization signal may include an SLSS and/or a PSBCH.

In the various embodiments of the present disclosure, configuration may include signaling, signaling from a network, configuration from a network, and/or a pre-configuration from a network. In the various embodiments of the present disclosure, definition may include signaling, signaling from a network, configuration from a network, and/or a pre-configuration from a network. In the various embodiments of the present disclosure, designation may include signaling, signaling from a network, configuration from a network, and/or a pre-configuration from a network.

In the various embodiments of the present disclosure, ProSe Per Packet Priority (PPPP) may be replaced with ProSe Per Packet Reliability (PPPR), and PPPR may be replaced with PPPP. For example, as the PPPP value becomes smaller, this may indicate a high priority, and, as the PPPP value becomes greater, this may indicate a low priority. For example, as the PPPR value becomes smaller, this may indicate a high reliability, and, as the PPPR value becomes greater, this may indicate a low reliability. For example, a PPPP value related to a service, a packet or a message being related to a high priority may be smaller than a PPPP value related to a service, a packet or a message being related to a low priority. For example, a PPPR value related to a service, a packet or a message being related to a high reliability may be smaller than a PPPR value related to a service, a packet or a message being related to a low reliability.

Meanwhile, in the present disclosure, a high priority may mean a small priority value, and a low priority may mean a large priority value. For example, Table 5 shows an example of priorities.

[Table 5]

| service or logical channel | priority value |
|---|---|
| service A or logical channel A | 1 |
| service B or logical channel B | 2 |
| service C or logical channel C | 3 |

Referring to Table 5, for example, service A or logical channel A related to the smallest priority value may have the highest priority. For example, service C or logical channel C related to the largest priority value may have the lowest priority.

In the various embodiments of the present disclosure, a session may include at least one of a unicast session (e.g., a unicast session for SL), a groupcast/multicast session (e.g., a groupcast/multicast session for SL), and/or a broadcast session (e.g., a broadcast session for SL).

In the various embodiments of the present disclosure, a carrier may be replaced with at least one of a BWP and/or a resource pool, or vice versa. For example, a carrier may include at least one of a BWP and/or a resource pool. For example, a carrier may include one or more BWPs. For example, a BWP may include one or more resource pools.

Meanwhile, in sidelink (SL) mode-1 operation, when a base station sets a DCI SL HARQ process ID for Configured Grant (CG) or Dynamic Grant (DG) resource(s) to be used by a UE for SL communication through Radio Resource Control (RRC) or Downlink Control Information (DCI), the TX UE interprets the DCI SL HARQ process ID for specific transport block (TB) transmission allocated to the TX UE by the base station differently from that of the base station, or there may be ambiguity in interpreting a SCI SL HARQ process ID transmitted by the TX UE through SCI for SL communication as TB transmission different from a TB to be transmitted indicated through the DCI SL HARQ process ID set by the base station to the TX UE. The present disclosure removes such ambiguity and proposes a method for efficiently allocating/determining a DCI SL HARQ process ID in SL mode-1 operation.

In the present disclosure, y = floor (x) may be a function deriving the largest integer among real numbers smaller than x. In the present disclosure, y = (x) modulo (z) may be a function deriving a remainder obtained by dividing x by z.

Based on an embodiment of the present disclosure, a DCI SL HARQ process ID may be determined or obtained by Equation 1 below. For example, the base station may determine or set the DCI SL HARQ process ID based on Equation 1.

[Equation 1]

$$\text{DCI SL HARQ Process ID} = [\text{floor}(\text{CURRENT\_symbol}/\text{periodicity})] \text{ modulo nrofHARQ-Processes,}$$

where

$$\text{CURRENT\_symbol} = (\text{SFN} \times \text{numberOfSlotsPerFrame} \times \text{numberOfSymbolsPerSlot} + \text{slot number in the frame} \times \text{numberOfSymbolsPerSlot} + \text{symbol number in the slot})$$

numberOfSlotsPerFrame = number of slots per frame

numberOfSymbolsPerSlot = the number of symbols per slot

nrofHARQ-Processes = the number of configured HARQ processes for SPS;

periodicity = periodicity of configured grant for SPS

In this case, for example, the slot and the symbol may be a physical slot and a physical symbol to which downlink (DL) numerology is applied. For example, the slot and the symbol may be a physical slot and a physical symbol to which SL numerology is applied. For example, the slot and the symbol may be a logical slot and a logical symbol to which SL numerology is applied. For example, the periodicity may be the number of physical symbols to which DL numerology is applied. For example, the periodicity may be the number of physical symbols to which SL numerology is applied. For example, the periodicity may be the number of logical symbols to which SL numerology is applied.

Equation 1 is an example in which the periodicity is configured in units of symbols. Meanwhile, in SL communication, the minimum resource allocation unit may be a slot unit. Accordingly, based on an embodiment of the present disclosure, a DCI SL HARQ process ID may be determined or obtained by Equation 2 in units of slots. For example, the base station may determine or set the DCI SL HARQ process ID based on Equation 2 below.

[Equation 2]

$$\text{DCI SL HARQ Process ID} = [\text{floor}(\text{CURRENT\_slot}/\text{periodicity})] \text{ modulo nrofHARQ-Processes,}$$

where

$$\text{CURRENT\_slot} = (\text{SFN} \times \text{numberOfSlotsPerFrame} + \text{slot number in the frame})$$

numberOfSlotsPerFrame = number of slots per frame

nrofHARQ-Processes = the number of configured HARQ processes for SPS;

periodicity = periodicity of configured grant for SPS

In this case, for example, the slot may be a physical slot to which DL numerology is applied. For example, the slot may be a physical slot to which SL numerology is applied. For example, the slot may be a logical slot to which SL numerology is applied. For example, the periodicity may be the number of physical slots to which DL numerology is applied. For example, the periodicity may be the number of physical slots to which SL numerology is applied. For example, the periodicity may be the number of logical slots to which SL numerology is applied.

Based on an embodiment of the present disclosure, a SCI SL HARQ process ID may be determined or obtained by Equation 3. For example, the UE may determine or set the SCI SL HARQ process ID based on Equation 3.

[Equation 3]

$$\text{SCI SL HARQ Process ID} = [\text{floor(CURRENT\_symbol/periodicity)}] \text{ modulo nrofHARQ-Processes,}$$

where

$$\text{CURRENT\_symbol} = (\text{SFN} \times \text{numberOfSlotsPerFrame} \times \text{numberOfSymbolsPerSlot} + \text{slot number in the frame} \times \text{numberOfSymbolsPerSlot} + \text{symbol number in the slot})$$

numberOfSlotsPerFrame = number of slots per frame

numberOfSymbolsPerSlot = the number of symbols per slot

nrofHARQ-Processes = the number of configured HARQ processes for SPS;

periodicity = periodicity of configured grant for SPS

In this case, for example, the slot and the symbol may be a physical slot and a physical symbol to which DL numerology is applied. For example, the slot and the symbol may be a physical slot and a physical symbol to which SL numerology is applied. For example, the slot and the symbol may be a logical slot and a logical symbol to which SL numerology is applied. For example, the periodicity may be the number of physical symbols to which DL numerology is applied. For example, the periodicity may be the number of physical symbols to which SL numerology is applied. For example, the periodicity may be the number of logical symbols to which SL numerology is applied.

Equation 3 is an example in which the periodicity is configured in units of symbols. Meanwhile, in SL communication, the minimum resource allocation unit may be a slot unit. Therefore, based on an embodiment of the present disclosure, a SCI SL HARQ process ID may be determined or obtained by Equation 4 in units of slots. For example, the UE may determine or set the SCI SL HARQ process ID based on Equation 4.

[Equation 4]

$$\text{SCI SL HARQ Process ID} = [\text{floor(CURRENT\_slot/periodicity)}] \text{ modulo nrofHARQ-Processes,}$$

where

$$\text{CURRENT\_slot} = (\text{SFN} \times \text{numberOfSlotsPerFrame} + \text{slot number in the frame})$$

numberOfSlotsPerFrame = number of slots per frame

nrofHARQ-Processes = the number of configured HARQ processes for SPS;

periodicity = periodicity of configured grant for SPS

In this case, for example, the slot may be a physical slot to which DL numerology is applied. For example, the slot may be a physical slot to which SL numerology is applied. For example, the slot may be a logical slot to which SL numerology is applied. For example, the periodicity may be the number of physical slots to which DL numerology is applied. For example, the periodicity may be the number of physical slots to which SL numerology is applied. For example, the periodicity may be the number of logical slots to which SL numerology is applied.

Or, for example, a SCI SL HARQ process ID transmitted by the UE through SCI for SL communication may be set to be the same as a DCI SL HARQ process ID set by the base station to the UE through DCI. For example, the UE may set or determine the SCI SL HARQ process ID to be the same as the DCI SL HARQ process ID set by the base station.

Or, for example, the UE may set or determine a SCI SL HARQ process ID independently of a DCI SL HARQ process ID set by the base station. For example, the UE may randomly set or determine the SCI SL HARQ process ID. This may be an implementation issue of the UE.

In this case, the UE may use all or part of UL resources of a carrier based on Time Division Duplex (TDD) as SL resources. Accordingly, a symbol and slot index used for Uu link and a symbol and slot index used for SL may not match each other. That is, a DL or SL physical slot index and a DL or SL physical symbol index may not match a SL logical slot index and a logical symbol index. In this case, a DCI SL HARQ process ID serves to correlate a CG or DG resource for initial transmission of a TB and a DG resource for retransmission of the TB by the base station. That is, by the base station configuring a second DCI SL HARQ process ID included in DCI for retransmission resource allocation to be the same as a first DCI SL HARQ process ID included in DCI for initial transmission resource allocation, the base station may limit the UE to transmit only a TB that has failed in initial transmission through the corresponding retransmission resource. For example, if the UE receives initial transmission resource-related DCI including a first DCI SL HARQ process ID and retransmission resource-related DCI including a second DCI SL HARQ process ID from the base station, and if the second DCI SL HARQ process ID is the same as the first DCI SL HARQ process ID, the UE may transmit only a TB that has failed in initial transmission through the retransmission resource.

In this case, if the TX UE randomly sets a SCI SL HARQ process ID transmitted for SL communication, the TX UE may use the SCI SL HARQ process ID independent of a DCI SL HARQ process ID set by the base station. However, if the TX UE retransmits a specific TB based on the SCI SL HARQ process ID used for initial transmission of the specific TB in SL communication, the TX UE may use the same SCI SL HARQ process ID used for initial transmission of the specific TB for retransmission of the specific TB. In addition, the TX UE may toggle a New Data Indicator (NDI) field, and through this, the TX UE should allow the RX UE to know that the retransmission by the TX UE is a retransmission for the same TB as the specific TB. In addition, the TX UE should allow the RX UE to perform the corresponding HARQ combining.

In this case, as described above, if the base station sets a DCI SL HARQ process ID based on a DL or SL physical slot/symbol index and transmits it through DCI because the DL or SL physical slot/symbol index and the SL logical symbol/index are different, and if the TX UE interprets the DCI SL HARQ process ID based on the SL logical slot/symbol index, the interpretation of the DCI SL HARQ process ID may be different between the base station and the UE.

To solve this problem, since the TX UE knows the difference between SFN=0 timing and DFN=0 timing and the TX UE knows the difference between the SL physical slot/symbol index and the SL logical slot/symbol index included in a SL resource pool, the TX UE may calculate or determine that the DCI SL HARQ process ID calculated by the base station according to the DL or SL physical slot/symbol index is used for initial transmission of a specific TB or retransmission of the specific TB by considering all of the above differences. In addition, the TX UE may map the DCI SL HARQ process ID to a SCI SL HARQ process ID independently generated by the TX UE for initial transmission of the specific TB. Thereafter, the TX UE may use the same SCI SL HARQ process ID as the SCI SL HARQ process ID to be used for retransmission of the specific TB through SL communication.

In some embodiments of the present disclosure, in the SL mode-1 operation, it is possible to remove the ambiguity of interpretation of the DCI SL HARQ process ID that the base station allocates to the UE through DCI and the SCI SL HARQ process ID that the TX UE transmits to the RX UE through SCI. Although the SCI SL HARQ process ID is set independently of the DCI SL HARQ process ID, a method for mapping the DCI SL HARQ process ID indicating initial transmission and retransmission for a specific TB by the TX UE to the SCI SL HARQ process ID was proposed.

In one embodiment, DG DCI for SL HARQ feedback-based retransmission may be scrambled by SL CS RNTI, not SL RNTI. Exemplary descriptions of this embodiment are described in Table 6 below.

[Table 6]

| |
|---|
| • To provide additional resources for retransmission upon receiving a SL NACK report, a dynamic grant is used.<br>　◦ When the initial transmission of a TB is scheduled by a dynamic grant, the CRC of the DCI carrying the dynamic grant is scrambled using the SL RNTI introduced for DCI for a dynamic grant.<br>　　■ The interpretation of NDI is the same as for Uu for retransmission scheduled by DCI with CRC scrambled by C-RNTI<br>　◦ When the initial transmission of a TB is scheduled by a configured grant (type-1 or type-2), the CRC of the DCI carrying the dynamic grant is scrambled using the SL CS RNTI introduced for DCI for a configured grant type-2.<br>　　■ For interpretation of NDI, the Uu behavior for retransmission scheduled by DCI with CRC scrambled by CS-RNTI is reused. |

In one embodiment, CRC of DG DCI for SL HARQ feedback-based retransmission may be scrambled by SL CS RNTI.

In one embodiment, if a HARQ PROCESS ID (e.g., the HARQ PROCESS ID may be different from a SL HARQ RROCESS ID actually included/indicated in SCI, and the HARQ PROCESS ID may be used to set a linkage between CG resource(s) with a specific index and retransmission resource(s) allocated through DG) is included in CG DCI, the HARQ PRORCESS ID may be used for the purpose of providing linkage information between CG resource(s) and retransmission resource(s) allocated through DG. To this end, the HARQ PROCESS ID information may be included in DG DCI for allocating retransmission resources as well. For example, the base station may transmit DG DCI for allocating retransmission resource(s) to the UE, and the DG DCI may include the HARQ PROCESS ID. Herein, for example, the HARQ RPOCESS ID used for this purpose may be configured by the base station/network to a value that does not overlap between different CGs. For example, in particular, if only one SL HARQ RROCESS is used/allowed per CG, the base station/network may set or determine the HARQ RPOCESS ID to a value that does not overlap between different CGs.

In an embodiment regarding SL HARQ feedback, multiplexing for SL HARQ and Uu UCI on PUCCH or PUSCH may not be supported. In this case, it is necessary to define a method for handling a case in which SL HARQ timing overlaps with UCI in the same situation. Since the PUCCH transmission timing for SPS PDSCH and CG for sidelink will not change dynamically, the collision between feedbacks for different links will not be completely prevented.

In UL-SL priority rules for power control or dropping for SL and UL simultaneous transmission according to an example, a priority of SL HARQ on PUCCH or PUSCH may be the same as a priority of SL HARQ of the corresponding PSFCH. On the other hand, a priority for UCI may not be defined. In this case, the LTE principle can be reused to drop either SL HARQ or Uu UCI. Specifically, if the priority of SL HARQ on PUCCH or PUSCH is smaller than a higher layer parameter sl-PriorityThreshold, SL HARQ feedback may be transmitted on PUCCH or PUSCH, and Uu UCI may be dropped. Otherwise, Uu UCI may be transmitted on PUCCH or PUSCH, and SL HARQ feedback may be dropped. Tables 7 to 11 below are examples directly or indirectly related to the present embodiment.

Table 7 below relates to a dropping rule for handling when a SL HARQ-ACK report overlaps with UCI.

[Table 7]

| Proposal 11: For dropping rule to handle the case where SL HARQ-ACK reporting is overlapped with UCI in a same occasions, |
| --- |
|     • A priority of the HARQ-ACK information for sidelink on PUCCH or PUSCH is the same as the priority of a corresponding PSFCH<br>    • A UE drops either SL HARQ-ACK reporting or UCI based on LTE principle, and the prioritized one is transmitted on PUCCH or PUSCH.<br>        ∘ For multiple SL HARQ-ACK information, the smallest value among priorities is used for comparison with sl-PriorityThreshold.<br>Meanwhile, according to the agreement made in email discussion [98b-NR-13], NR supports reporting of multiple SL HARQ-ACKs in a single PUCCH resource by reusing the Rel-15 procedures for multiplexing DL HARQ-ACKs. In our understanding, for dynamic grant, a single DCI scheduling SL resources will generate 1 bit of SL HARQ-ACK. For configured grant type 1 or type 2 for sidelink, 1 bit of SL HARQ-ACK will be generated for each resource period. To capture the agreement in the specification, it is necessary to investigate how to modify the Rel-15 procedures for multiplexing SL HARQ-ACKs.<br>For semi-static HARQ codebook, it is necessary to decide how to replace PDSCH time resource, and numerology of PDSCH. In addition, it does not need to consider CBG-based HARQ-ACK feedback and 2TB case. |

Table 8 below relates to a plurality of SL HARQ-ACKs in a single PUCCH resource in the Type-1 codebook case.

[Table 8]

| Proposal 12: For multiple SL HARQ-ACKs in a single PUCCH resource, in case of Type-1 codebook (i.e. semi-static codebook), |
| --- |
|     • A set of slot timing values K_1 for Uu link is replaced with a set of PSFCH-to-PUCCH timing values for sidelink.<br>    • PDSCH time resource is replaced with the last PSFCH occasion associated with a SL grant. |
|     • Numerology of PDSCH is replaced with numerology of sidelink.<br>    • TB-based HARQ-ACK feedback is used for sidelink even though PDSCH-CodeBlockGroupTransmission is provided.<br>    • 1 TB is used for SL HARQ-ACK feedback for sidelink even though maxNrofCodeWordsScheduledByDCI is 2.<br>Note that in case of semi-static HARQ codebook, bit position of SPS PDSCH reception is determined based on the position of the PDSCH time resource. In a similar manner, bit position of the configured SL resource could be determined based on the position of the PSFCH occasions. |

(continued)

| |
|---|
| For dynamic HARQ codebook, it is necessary to decide how to perform DAI counting and how to replace the set of PDCCH monitoring occasions, and SPS PDSCH reception. In addition, it does not need to consider CBG-based HARQ-ACK feedback and 2TB case. |

Table 9 below relates to a plurality of SL HARQ ACKs in a single PUCCH resource in the Type-2 codebook case.

[Table 9]

| |
|---|
| **Proposal 13**: For multiple SL HARQ-ACKs in a single PUCCH resource, in case of Type-2 codebook (i.e. dynamic codebook),<br><br>• Introduce SAI (sidelink assignment) field in DCI for DG.<br>     ◦ DAI is replaced with SAI and counting SAI for SL HARQ-ACK feedback is independent on counting DAI for DL HARQ-ACK feedback.<br>• The set of PDCCH monitoring occasions for DCI format 1_0 or DCI format 1_1 for scheduling PDSCH receptions or SPS PDSCH release is replaced with the set of PDCCH monitoring occasions for DCI for SL dynamic grant.<br>• TB-based HARQ-ACK feedback is used even though PDSCH-CodeBlockGroupTransmission is provided.<br>• 1 TB is used for SL HARQ-ACK feedback even though maxNrofCodeWordsScheduledByDCI is 2.<br>• SPS PDSCH reception is replaced with the last PSFCH reception associated with Configured grant.<br>Note that in case of dynamic HARQ codebook, HARQ-ACK bit for SPS PDSCH reception is concatenated to HARQ-ACK bits for PDSCH scheduled by PDCCH since SPS PDSCH would not have PDCCH except for the activation, so DAI-based bit ordering cannot be used. In a similar manner, HARQ-ACK bit of the configured SL resource would be concatenated to the HARQ-ACK bits for dynamic SL grants. |

Table 10 below relates to timing and resource for PUCCH.

[Table 10]

| |
|---|
| *Proposal 14*: *Adopt TP#2 and TP#4 in Appendix for Proposal 12-13.*<br>In RAN1#99 meetings, it is agree that one combination of "timing and resource for PUCCH" is used ot indicate that PUCCH resource is not provided for case of DG and type 2 CG. In our view, without introducing additional RRC parameter to indicate this pair, it can be considered that a certain combination of the timing and resource for PUCCH can be selected for that purpose. Since PUCCH resource definition includes the starting symbol of a slot for PUCCH transmission, the actual timing difference between PSFCH reception and PUCCH transmission will be determined by a combination of the timing indicator and resource indicator for PUCCH. Considering that the largest timing difference would not be useful in terms of latency, it can be considered that a combination of the timing indicator and resource indicator for PUCCH that make the largest timing difference between PSFCH reception and PUCCH transmission indicates that PUCCH is not provided. |

Table 11 below relates to timing and resources for PUCCH.

[Table 11]

| |
|---|
| **Proposal 15**: For case of DG and type 2 CG, when a combination of "timing and resource for PUCCH" such that the actual timing difference between PSFCH reception and PUCCH transmission is the largest among the configured values is indicated by the DCI, the UE does not transmit PUCCH.<br>     On PSFCH TX/RX collision issue, it is possible that PSFCH TX is prioritized over PSFCH<br>RX. In other words, even though the RX UE transmit SL HARQ-ACK on PSFCH to the TX UE, the TX UE does not receive it. In this case, it seems straightforward that the SL HARQ-ACK state(s) associated with the PSFCH(s) which are not received by the TX UE due to the prioritization are treated as NACK state even for the groupcast option 1. |

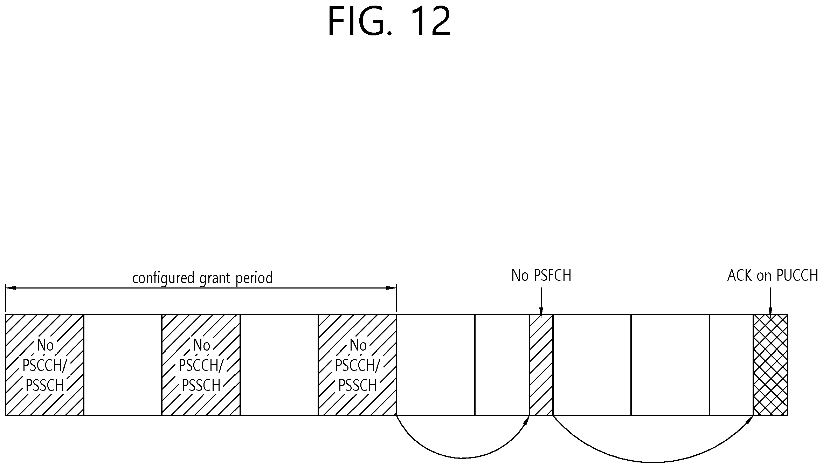

FIG. 12 shows an example in which a first device reports sidelink HARQ ACK for sidelink CG to a base station on a PUCCH.

In one embodiment, under unicast and/or groupcast situation, if the TX UE does not receive (SL HARQ feedback) due to a priority, the TX UE may report HARQ NACK to the gNB.

With respect to CG, the TX UE may or may not transmit a PSCCH/PSSCH to the RX UE(s). In this case, since the RX UE does not receive the PSCCH and the PSSCH from the TX UE, the RX UE may not transmit the PSFCH. Thereafter, if NACK for a set of SL resources configured within a period is reported to the gNB, the gNB may make an incorrect decision in scheduling retransmission resources or modifying the configured SL resources. In this regard, as shown in FIG. 12, if the PSCCH/PSSCH is not transmitted in the set of resources within the period for the CG, a method for the TX UE to report ACK may be considered.

If the TX UE reports ACK to the gNB when the PSCCH/PSSCH is not transmitted in the set of resources within the period for the CG, the maximum number of HARQ (re-)transmission for a TB could be used for deciding SL HARQ-ACK to be reported to the gNB. To be specific, the gNB cannot know TX UE's starting timing of transmission for a TB since the TX UE can use any resource occasion of configured grant for its initial transmission of a TB. In other words, the gNB cannot know how many transmissions are performed for a TB at TX UE side. At that time, the number of (re-)transmission for a certain TB reaches the configured maximum value, the TX UE does not need to have additional resources for the retransmission of the TB. In other words, for this case, the TX UE can report ACK to the gNB regardless of whether the TX UE receives PSFCH carrying ACK for the TB.

In one embodiment, if the maximum number of HARQ re-transmission for a TB is configured, in case of reaching the maximum number of HARQ re-transmissions for a TB, the TX UE reports ACK to the gNB.

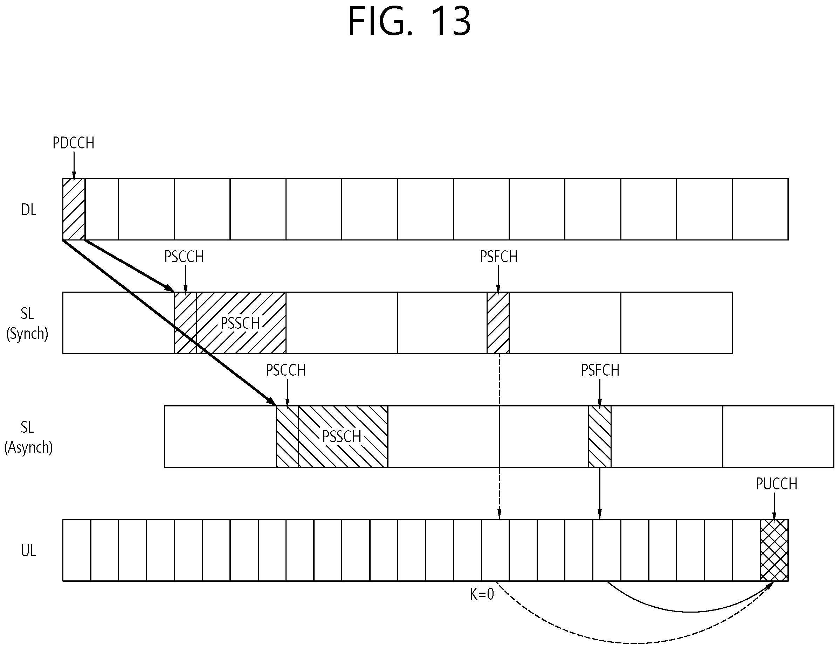

FIG. 13 shows an example of PSFCH-to-PUCCH transmission timing in synchronous case and asynchronous case.

In an embodiment, the assumptions shown in Table 12 below may be applied to define the PUCCH transmission timing.

[Table 12]

| Working assumption: |
| --- |
| • The timing of the PUCCH used for conveying SL HARQ is indicated in DCI or RRC (only for transmissions without a DCI) in terms of PSFCH-to-PUCCH physical slots, where the slot duration is defined based on the PUCCH SCS. |
| Note: it is not intended to define any new sync requirements for gNBs |

According to an embodiment, for synchronous case where SL slot boundary is aligned with Uu slot boundary, there is no ambiguity on PUCCH transmission timing between UE and gNB. On the other hand, for asynchronous case where SL slot boundary is not aligned with that of Uu slot boundary, it would be necessary to define how gNB and UE have the same understanding on the PUCCH transmission timing. In addition, gNB may not know which synchronization reference resource is selected by a UE. On the other hand, UE knows both Uu slot boundary and SL slot boundary.

First of all, gNB always assumes that synchronous case to indicate PUCCH transmission timing and to receive PUCCH transmitted by the UE. On the other hand, the UE reinterprets the indicated PSFCH-to-PUCCH transmission timing depending on the time difference between Uu slot boundary and SL slot boundary. For example, referring to FIG. 13, gNB assumes that SL slot boundary is aligned with Uu slot boundary and set the value of PSFCH-to-PUCCH timing to 10. In this case, when UE is in synchronous case, the UE will transmit a PUCCH 10 UL-slots later after the PSFCH reception. On the other hand, when UE is in asynchronous case, the UE will compensate the value of PSFCH-to-PUCCH timing according to the time difference between the PSFCH reception time for synchronous case and the actual PSFCH reception time. In this example, UE will change the PSFCH-to-PUCCH timing from 10 slots into 6 slots. In this case, even for the asynchronous case, gNB and UE can have the same understanding on the PUCCH transmission timing.

In one embodiment, when SL slot boundary and UL slot boundary is not aligned, the reference point for PSFCH-to-PUCCH timing is determined based on following:

Step 1: The UE determines virtual PSFCH reception time based on the timing of the serving cell associated with the SL DCI reception.
Step 2: The UE assumes that k=0 corresponds to a last slot for a PUCCH transmission which overlaps with the last virtual PSFCH reception occasion.

Meanwhile, in an embodiment, DCI format 3_0 may be related to Table 13 below.

[Table 13]

7.3.1.4.1 Format 3_0

DCI format 3_0 is used for scheduling of NR PSCCH and NR PSSCH in one cell.

The CRC of the DCI format 3_0 for dynamic grant is scrambled by SL-RNTI, and the CRC of the

DCI format 3_0 for dynamic grant for SL HARQ retransmission or for configured grant type 2 is scrambled by SL-CS-RNTI.

The following information is transmitted by means of the DCI format 3_0 with CRC scrambled by SL-RNTI or SL-CS-RNTI:

    - Time gap - [x] bits determined by higher layer parameter *timeGapFirstSidelinkTransmission,* as defined in subclause x.x.x of [6, TS 38.214]

    - HARQ process ID - [x] bits as defined in subclause x.x.x of [6, TS 38.214] if the CRC of the DCI format 3_0 is scrambled by SL-RNTI; otherwise 0 bit

    - Sidelink assignment index - [x] bits

    - New data indicator - 1 bit as defined in subclause x.x.x of [6, TS 38.214]

    - Lowest index of the subchannel allocation to the initial transmission $-\left\lceil \log_2(N_{\text{subChannel}}^{\text{SL}}) \right\rceil$ bits as defined in subclause x.x.x of [6, TS 38.214]

    - SCI format 0-1 fields according to subclause 8.3.1.1:

    - Frequency resource assignment.

    - Time resource assignment.

    - PSFCH-to-HARQ feedback timing indicator - 3 bits as defined in subclause x.x.x of [6, TS 38.214].

    - PUCCH resource indicator - 3 bits as defined in subclause x.x.x of [6, TS 38.214].

    - Configuration index - 0 bit if the UE is not configured to monitor DCI format 3_0 with CRC scrambled by SL-CS-RNTI; otherwise [x] bits as defined in subclause x.x.x of [6, TS 38.214]. If the UE is configured to monitor DCI format 3_0 with CRC scrambled by SL-CS-RNTI and DCI format 3_0 with CRC scrambled by SL-RNTI, this field is reserved for DCI format 3_0 with CRC scrambled by SL-RNTI zeros shall be appended to DCI format 3_0 with CRC scrambled by SL-RNTI until the payload size equals that of DCI format 3 0 with CRC scrambled by SL-CS-RNTI.

In one embodiment, the Type-1 HARQ-ACK codebook determination may be related to Table 14 below.

[Table 14]

16.5.1 Type-1 HARQ-ACK codebook determination

This clause applies if the UE is configured with *pdsch-HARQ-ACK-Codebook = semi-static.* A UE reports HARQ-ACK information for a corresponding PSFCH reception only in a HARQ-ACK codebook that the UE transmits in a slot indicated by a value of a PSFCH-to-HARQ feedback timing indicator field in a corresponding DCI format 3_0 or *sl-ACKToUL-ACK.*

The UE reports NACK value(s) for HARQ-ACK information bit(s) in a HARQ-ACK codebook that the UE transmits in a slot not indicated by a value of a PSFCH-to-HARQ_feedback timing indicator field in a corresponding DCI format 3_0 or *sl-ACKToUL-ACK.*

If a UE reports HARQ-ACK information in a PUCCH only for - a PSFCH reception associated with a PSSCH scheduled by DCI format 3_0 with counter SAI field value of 1, or SAI

    - a PSFCH receptions associated with a PSSCH scheduled by SL configured grant

within the $M_{A,C}$ occasions for candidate PSFCH receptions as determined in Clause 16.5.1.1, the UE determines a HARQ-ACK codebook only for the PSFCH reception according to corresponding $M_{A,C}$ occasion(s) on respective serving cell(s), where the value of counter DAI in DCI format 3_0 is according to Table 16.5.3-1 and HARQ-ACK information bits in response to SPS PDSCH receptions are ordered according to the following pseudo-code; otherwise, the procedures in Clause 16.5.1.1 and Clause 16.5.1.2 for a HARQ-ACK codebook determination apply.

Set $N_c^{\text{SPS}}$ to the number of SL configured grant configuration configured to the UE for serving cell c

Set $N_c^{\text{SL}}$ to the number of SL slots for PSFCH reception on serving cell c with HARQ-ACK information multiplexed on the PUCCH

(continued)

---

16.5.1 Type-1 HARQ-ACK codebook determination

Set $j$ = 0 - HARQ-ACK information bit index

    Set s = 0 - SL configured grant configuration index: lower indexes correspond to lower RRC indexes of corresponding SL configured grant configurations

        while $s < N_c^{SPS}$

           Set $n_S$ = 0 - slot index

               while $n_S < N_c^{SL}$

                    if UE receives PSFCH associated with a PSSCH scheduled by SL configured grant in slot $n_S$ for SL configured grant configuration s on serving cell c

                    $\tilde{o}_j^{ACK} = $ HARQ-ACK

                          information bit for this PSFCH reception

                          $j = j$ + 1;

                    end if

                    $n_S = n_S$ + 1;

               end while

               s = s + 1;

        end while

    end while

---

In another embodiment, the Type-1 HARQ-ACK codebook determination may be related to Table 15 below.

[Table 15]

---

16.5.1 Type-1 HARQ-ACK codebook determination

This clause applies if the UE is configured with *pdsch-HARQ-ACK-Codebook = semi-static.* A UE reports HARQ-ACK information for a corresponding PSFCH reception only in a HARQ-ACK codebook that the UE transmits in a slot indicated by a value of a PSFCH-to-HARQ feedback timing indicator field in a corresponding DCI format 3_0 or *sl-ACKToUL-ACK.*

The UE reports NACK value(s) for HARQ-ACK information bit(s) in a HARQ-ACK codebook that the UE transmits in a slot not indicated by a value of a PSFCH-to-HARQ_feedback timing indicator field in a corresponding DCI format 3_0 or *sl-ACKToUL-ACK.*

If a UE reports HARQ-ACK information in a PUCCH only for

    - a PSFCH reception associated with a PSSCH scheduled by DCI format 3_0 with counter SAI field value of 1, or

    - a PSFCH receptions associated with a PSSCH scheduled by SL configured grant within the $M_{A,c}$ occasions for candidate PSFCH receptions as determined in Clause 16.5.1.1, the UE determines a HARQ-ACK codebook only for the PSFCH reception according to corresponding $M_{A,c}$ occasion(s) on respective serving cell(s), where the value of counter SAI in DCI format 3_0 is according to Table 16.5.3-1 and HARQ-ACK information bits in response to SPS PDSCH receptions are ordered according to the following pseudo-code; otherwise, the procedures in Clause 16.5.1.1 and Clause 16.5.1.2 for a HARQ-ACK codebook determination apply.

---

Set $N_c^{SPS}$ to the number of SL configured grant configuration configured to the UE for serving cell c

Set $N_c^{SL}$ to the number of SL slots for PSFCH reception on serving cell c with HARQ-ACK information multiplexed on the PUCCH

Set $j$ = 0 - HARQ-ACK information bit index

    Set s = 0 - SL configured grant configuration index: lower indexes correspond to lower RRC indexes of corresponding SL configured grant configurations

---

(continued)

16.5.1 Type-1 HARQ-ACK codebook determination

while $s < N_c^{SPS}$

Set $n_S = 0$ - slot index

while $n_S < N_c^{SL}$

if UE receives PSFCH associated with a PSSCH scheduled by SL configured grant in slot $n_S$ for SL configured grant configuration s on serving cell c

$$\tilde{o}_j^{ACK} = \text{HARQ-ACK}$$

information bit for this PSFCH reception

$j = j + 1$;

end if

$n_S = n_S + 1$;

end while

$s = s + 1$;

end while

end while

In one embodiment, with respect to the Type-1 HARQ-ACK codebook of PUCCH, for a serving cell c, an active SL BWP and an active UL BWP, the UE may determine a set of $M_{A,C}$ occasions for candidate PSFCH receptions for which the UE can transmit corresponding HARQ-ACK information in a PUCCH in slot $n_u$. The determination may be based on, for example, Table 16 below.

[Table 16]

a) on a set of slot timing values $K_1$ associated with the active UL BWP

a) If the UE is configured to monitor PDCCH for DCI format 3_0 for serving cell *c*, $K_1$ is provided by *sl-ACKToUL-ACK* for DCI format 3_0

b) on the ratio $2^{\mu_{SL}-\mu_{UL}}$ between the sidelink SCS configuration $\mu_{SL}$ and the uplink SCS configuration $\mu_{UL}$ provided by *subcarrierSpacing* in *BWP-Sidelink* and *BWP-Uplink* for the active SL BWP and the active UL BWP, respectively

c) if provided, on *tdd-UL-DL-ConfigurationCommon* and *tdd-UL-DL-ConfigurationDedicated* as described in Clause 11.1.

In one embodiment, for the slot timing value $K_1$, the UE may determine the set of $M_{A,C}$ occasions for candidate PSFCH receptions according to the pseudo-code of Table 17 below.

[Table 17]

Set *j* = 0 - index of occasion for candidate PSFCH reception

Set *B*=Ø

Set $M_{A,c}$ =Ø

Set $\mathcal{C}(K_1)$ to the cardinality of set $K_1$,

Set *k* =0 - index of slot timing values $K_{1,k}$, in descending order of the slot timing values, in set $K_1$ for serving cell C

while $k < \tilde{\mathcal{C}}(K_1)$

if mod($n_U - K_{1,k} + 1$, max($2^{\mu_{UL}-\mu_{SL}}$, 1)) = 0

Set $n_S$ = 0 - index of a SL slot within an UL slot

while $n_S$ < max($2^{\mu_{SL}-\mu_{UL}}$, 1)

(continued)

| |
|---|
| if slot $n_U$ starts at a same time as or after a slot for an active DL BWP change on serving cell c or an active UL BWP change on the PCell and slot $[(n_U - K_{1,k}) \cdot 2^{\mu_{SL}-\mu_{UL}}] + n_D$ is before the slot for the active DL BWP change on serving cell c or the active UL BWP change on the PCell $$n_S = n_S + 1;$$ else $$M_{A,c} = M_{A,c} \cup j;$$ $$j = j+1;$$ $$n_D = n_D + 1;$$ end if end while end if $k = k+1;$ end while |

In addition, with respect to Table 16 and/or Table 17, the Examples related to Table 18 below may be further applied and/or reviewed.

[Table 18]

| |
|---|
| If a UE receives a PSFCH receptions associated with a PSSCH scheduled by SL configured grant, or a PSFCH reception associated with a PSSCH scheduled by DCI format 3_0 and if |
| -        the UE is configured with one serving cell, and |
| -   $\mathcal{C}(M_{A,c})=1$ and |
| the UE generates HARQ-ACK information only for the PSFCH reception A UE does not expect to detect a DCI format switching a DL BWP within $N_3$ symbols prior to a first symbol of a PUCCH transmission where the UE multiplexes HARQ-ACK information, where $N_3$ is defined in Clause 9.2.3. |
| A UE determines $\tilde{o}_0^{ACK}, \tilde{o}_1^{ACK}, ..., \tilde{o}_{O^{ACK}-1}^{ACK}$ HARQ-ACK information bits, for a total number of $O_{ACK}$ HARQ-ACK information bits, of a HARQ-ACK codebook for transmission in a PUCCH according to the following pseudo-code. In the following pseudo-code, if the UE does not receive a PSFCH, due to the UE not detecting a corresponding DCI format 3_0, the UE generates a NACK value for the PSFCH. The cardinality of the set $M_{A,c}$ defines a total number $M_c$ of occasions for PSFCH reception for serving cell c corresponding to the HARQ-ACK information bits. |
| Set $j$=0- HARQ-ACK information bit index |
| Set $m$ = 0 - index of occasion for candidate PSFCH reception while $m < M_c$ |
| $$\tilde{o}_j^{ACK} = \text{HARQ-ACK}$$ |
| = HARQ-ACK information bit of serving cell c; $j = j+1;$ $m=m+1;$ |
| end while |
| end while |
| If $O_{ACK}+O_{SR} + O_{CSI} \le 11$, the UE determines a number of HARQ-ACK information bits $n_{HARQ-ACK}$ for obtaining a transmission power for a PUCCH, as described in Clause 7.2.1, as $n_{HARQ-ACK} = \sum_{m=0}^{M_c-1} \bar{N}_{m,c}^{received}$ where |
| -   $N_{m,c}^{received}$ is the number of SL-HARQ-ACK feedbacks the UE receives in PSFCH reception occasion $m$ for serving cell c |

In one embodiment, the Type-1 HARQ-ACK codebook in PUCCH may be related to Table 19 below.

[Table 19]

16.5.1.2 Type-1 HARQ-ACK codebook in physical uplink shared channel If a UE would multiplex HARQ-ACK information in a PUSCH transmission that is not scheduled by a DCI format or is scheduled by DCI format 0_0, then

- if the UE has not received any PSFCH that the UE transmits corresponding HARQ-ACK information in the PUSCH, based on a value of a respective PSFCH-to-HARQ_feedback timing indicator field in a DCI format scheduling the PSCCH/PSSCH transmission or on the value of *sl-ACKToUL-ACK* if the PSFCH-to-HARQ feedback timing indicator field is not present in the DCI format, in any of the $M_c$ occasions for candidate PSFCH receptions on any serving cell *c,* as described in Clause 16.5.1.1, the UE does not multiplex HARQ-ACK information in the PUSCH transmission;

- else the UE generates the HARQ-ACK codebook as described in Clause 16.5.1.1 unless the UE receives only a PSFCH reception associated with a PSSCH scheduled by SL configured grant, or only a PSFCH reception associated with a PSSCH scheduled by DCI format 3_0 with counter SAI field value of 1 on the PCell in the $M_c$ occasions for candidate PSFCH receptions in which case the UE generates HARQ-ACK information only for the PSFCH reception as described in Clause 16.5.1.

A UE sets to NACK value in the HARQ-ACK codebook any HARQ-ACK information corresponding to PSFCH reception that the UE detects in a PDCCH monitoring occasion that starts after a PDCCH monitoring occasion where the UE detects a DCI format 0_0 or a DCI format 0_1 scheduling the PUSCH transmission.

A UE does not expect to detect a DCI format switching a DL BWP within $N_2$ symbols prior to a first symbol of a PUSCH transmission where the UE multiplexes HARQ-ACK information, where $N_2$ is defined in [6, TS 38.214].

If a UE multiplexes HARQ-ACK information in a PUSCH transmission that is scheduled by DCI format 0_1, the UE generates the HARQ-ACK codebook as described in Clause 16.5.1.1 when a value of the DAI field in DCI format 0_1 is $V_{\mathrm{T-DAI}}^{\mathrm{UL}} = 1$. The UE does not generate a HARQ-ACK codebook for multiplexing in the PUSCH transmission when $V_{\mathrm{T-DAI}}^{\mathrm{UL}} = 0$ unless the UE receives only a SPS PDSCH release, or only a SPS PDSCH, or only a PDSCH that is scheduled by DCI format 1_0 with a counter DAI field value of 1 on the PCell in the $M_c$ occasions for candidate PDSCH receptions in which case the UE generates HARQ-ACK information only for the SPS PDSCH release or only for the PDSCH reception as described in Clause 9.1.2. $V_{\mathrm{T-DAI}}^{\mathrm{UL}} = 0$ if the DAI field in DCI format 0_1 is set to '0'; otherwise, $V_{\mathrm{T-DAI}}^{\mathrm{UL}} = 1$.

In one embodiment, the Type-2 HARQ-ACK codebook determination may be related to Table 20 below.

[Table 20]

16.5.2 Type-2 HARQ-ACK codebook determination

This clause applies if the UE is configured with *pdsch-HARQ-ACK-Codebook = dynamic.* Unless stated otherwise, a PSFCH-to-HARQ feedback timing indicator field provides an applicable value.

16.5.2.1 Type-2 HARQ-ACK codebook in physical uplink control channel

A UE determines monitoring occasions for PDCCH with DCI format scheduling SL resources on an active SL BWP of a serving cell c, as described in Clause 10.1, and for which the UE transmits HARQ-ACK information in a same PUCCH in slot *n* based on

- PSFCH-to-HARQ feedback timing indicator field values for PUCCH transmission with HARQ-ACK information in slot *n* in response to PSFCH reception ending
- Time gap field in a DCI format scheduling SL resources.

PDCCH monitoring occasions are indexed in an ascending order of start times of the search space sets. For indexing within a serving cell for a same start time of search space sets. The cardinality of the set of PDCCH monitoring occasions defines a total number M of PDCCH monitoring occasions.

(continued)

| |
|---|
| A value of the counter sidelink assignment indicator (SAI) field in DCI formats denotes the accumulative number of PDCCH monitoring occasion(s) in which PSFCH reception(s) associated with the DCI formats is present up to the current PDCCH monitoring occasion, in ascending order of PDCCH monitoring occasion index $m$, where $0 \leq m < M$. <br><br> Denote by $N_{C-SAI}^{SL}$ the number of bits for the counter SAI and set $T_S = 2^{N_{C-SAI}^{SL}}$. Denote by $V_{C-SAI,c,m}^{SL}$ the value of the counter SAI in a DCI format scheduling SL resources on serving cell c in PDCCH monitoring occasion $m$ according to Table 16.5.2-1. |

With reference to Table 20, if the UE transmits HARQ-ACK information in a PUCCH in slot n, and for any PUCCH format, the UE may determine the $O_0^{\sim ACK}$, $O_1^{\sim ACK}$, etc, for a total number of $O_{ACK}$ HARQ-ACK information bits, according to Tables 21 and 22 below.

[Table 21]

Set $m$=0 - PDCCH with DCI format scheduling SL resources monitoring occasion index:
    lower index corresponds to earlier PDCCH monitoring occasion

Set $j$=0

Set $V_{temp} = 0$

Set $V_{temp2} = 0$

Set $V_s = \emptyset$

Set $M$ to the number of PDCCH monitoring occasion(s)

while $m<M$

    unless PDCCH monitoring occasion $m$ is before an active DL BWP change on serving cell c or an active UL BWP change on the PCell and an active DL BWP change is not triggered in PDCCH monitoring occasion $m$

        if there is a PSFCH reception associated with PDCCH in PDCCH monitoring occasion $m$

$$\text{if } \quad V_{C-SAI,c,m}^{SL} \leq V_{temp}$$

$$j = j+1$$

$$\text{end if } \quad V_{temp} = V_{C-SAI,c,m}^{SL} \qquad V_{temp2} = V_{C-SAI,c,m}^{SL}$$

$$\tilde{o}_{T_S \cdot j + V_{C-SAI,c,m}^{SL} - 1}^{ACK} = \text{HARQ-ACK}$$

information bit of this cell

$$V_s = V_s \cup \left\{ T_S \cdot j + V_{C-SAI,c,m}^{SL} - 1 \right\} \quad \text{end if}$$

        end if

    $m$=$m$+1

  end while ...

[Table 22]

if $V_{temp2} < V_{temp}$
    $j$=$j$+1
end if
    $O^{ACK} = T_S \cdot j + V_{temp2}$

(continued)

> end if $\widetilde{o}_i^{ACK} = \mathrm{NACK}$
>
> for any $i \in \{0,1,..., O^{ACK}-1\}\backslash V_s$
>
>> if a single SL configured grant configuration is activated for a UE and the UE is configured to receive a PSFCH associated with PSCCH/PSSCH on the SL configured grant resource in a slot $n\text{-}K_{1,c}$ for serving cell $c$, where $K_{1,c}$ is the PSFCH-to-HARQ-feedback timing value for SL configured grant configuration on serving cell c
>>
>> $O^{ACK} = O^{ACK} + 1 \quad o_{O^{ACK}-1}^{ACK} = \mathrm{HARQ\text{-}ACK}$
>>
>> information bit associated with the PSFCH reception associated
>>
>>> with SL configured grant PSCCH/PSSCH
>>
>> end if

In an embodiment, with reference to Table 21 and/or Table 22, the embodiment to Table 23 below may be applied and/or discussed together.

[Table 23]

If multiple SL configured grant configurations are activated for a UE and the UE multiplexes corresponding HARQ-ACK information in the PUCCH in slot $n$, the UE generates the HARQ-ACK information as described in Clause 16.5.1 and appends it to the $O^{ACK}$ HARQ-ACK information bits.

If $O_{ACK} + O_{SR} + O_{CSI} \leq 11$, the UE determines a number of HARQ-ACK information bits $n_{HARQ\text{-}ACK}$ for obtaining a transmission power for a PUCCH, as described in Clause 7.2.1, as

$$n_{HARQ\text{-}ACK} = \left(\left(V_{\mathrm{SAI},m_{\mathrm{last}}}^{\mathrm{SL}} - U_{\mathrm{SAI},c}\right) mod(T_S)\right) + \sum_{m=0}^{M-1} N_{m,c}^{\mathrm{received}} + N_{\mathrm{SPS},c} \quad \text{where}$$

> - $V_{\mathrm{SAI},m_{\mathrm{last}}}^{\mathrm{SL}}$ is the value of the counter SAI in the last DCI format scheduling SL resources for any serving cell c that the UE detects within the M PDCCH monitoring occasions.
>
> - $V_{\mathrm{SAI},m_{\mathrm{last}}}^{\mathrm{SL}} = 0$ if the UE does not detect any DCI format scheduling SL resources for any serving cell c in any of the M PDCCH monitoring occasions.
>
> - $U_{\mathrm{SAI},c}$ is the total number of a DCI format scheduling SL resources that the UE detects within the M PDCCH monitoring occasions for serving cell c. $U_{\mathrm{SAI},c} = 0$ if the UE does not detect any DCI format scheduling SL resources for serving cell c in any of the $M$ PDCCH monitoring occasions.
>
> - $N_{m,c}^{\mathrm{received}}$ is the number of PSFCH associated with PSCCH/PSSCH scheduled by a DCI format that the UE detects in PDCCH monitoring occasion $m$ for serving cell c .

- $N_{\mathrm{SPS},c}$ is the number of PSFCH receptions associated with SL configured grant resources by the UE on serving cell c for which the UE transmits corresponding HARQ-ACK information in the same PUCCH as for HARQ-ACK information corresponding to PSFCH receptions within the $M$ PDCCH monitoring occasions.

In one embodiment, with respect to Table 23, a value of counter SAI for $N_{C\text{-}SAI}^{SL}=2$ may be as shown in Table 24 below.

[Table 24]

| SAI MSB, LSB | $V_{c-\text{SAI}}^{\text{SL}}$ | Number of PDCCH monitoring occasion(s) in which PSFCH is present, denoted as Y and Y≥1 |
|---|---|---|
| 0,0 | 1 | $(Y - 1)\ mod\ T_D + 1 = 1$ |
| 0,1 | 2 | $(Y - 1)mod T_D + 1 = 2$ |
| 1,0 | 3 | $(Y - 1)\ mod\ T_D + 1 = 3$ |
| 1,1 | 4 | $(Y - 1)\ mod\ T_D + 1 = 4$ |

In one embodiment, the Type-2 HARQ-ACK codebook in PUCCH may be related to Table 25 below.

[Table 25]

16.5.2.2 Type-2 HARQ-ACK codebook in physical uplink shared channel If a UE would multiplex HARQ-ACK information in a PUSCH transmission that is not scheduled by a DCI format or is scheduled by a DCI format that does not include a SAI field, then

- if the UE has not received any PDCCH within the monitoring occasions for DCI formats scheduling SL resources on any serving cell $_c$ and the UE does not have HARQ-ACK information in response to a PSFCH reception associated with SL configured grant to multiplex in the PUSCH, as described in Clause 16.5.2.1, the UE does not multiplex HARQ-ACK information in the PUSCH transmission;

- else, the UE generates the HARQ-ACK codebook as described in Clause 16.5.2.1.

If a UE multiplexes HARQ-ACK information in a PUSCH transmission that is scheduled by DCI format 0_1, the UE generates the HARQ-ACK codebook as described in Clause 16.5.2.1, with the following modifications:

- For the pseudo-code for the HARQ-ACK codebook generation in Clause 16.5.2.1, after the completion of the $m$ loops, the UE sets $V_{temp2} = V_{\text{DAI}}^{\text{UL}}$

where $V_{\text{DAI}}^{\text{UL}}$ is the value of the DAI field in DCI format 0_1 according to Table 16.5.2-2

If a UE is scheduled for a PUSCH transmission by DCI format 0_1 with DAI field value $V_{\text{T-DAI}}^{\text{UL}} = 4$ and the UE has not received any PDCCH within the monitoring occasions for PDCCH with DCI format 3_0 for scheduling SL resources on any serving cell C and the UE does not have HARQ-ACK information in response to a PSFCH reception associated with SL configured grant to multiplex in the PUSCH, as described in Clause 16.5.2.1, the UE does not multiplex HARQ-ACK information in the PUSCH transmission.

With respect to Table 25, a value of DAI in DCI format 0_1 may be, for example, as shown in Table 26 below.

[Table 26]

| DAI MSB, LSB | $V_{\text{T-DAI}}^{\text{UL}}$ T-DAI | Number of PDCCH monitoring occasion(s) in which PSFCH is present, denoted as X and X ≥ 1 |
|---|---|---|
| 0,0 | 1 | $(X - 1)mod4+1 = 1$ |
| 0,1 | 2 | $(X - 1)mod\ 4 + 1 = 2$ |
| 1,0 | 3 | $(X - 1)mod\ 4+1 = 3$ |
| 1,1 | 4 | $(X - 1)mod\ 4+1 = 4$ |

In one embodiment, the UE procedure for reporting HARQ-ACK on uplink may be as shown in Table 27 below.

[Table 27]

| 16.5 UE procedure for reporting HARQ-ACK on uplink A UE can be provided PUCCH resources [12, TS 38.331] to report HARQ-ACK information to a serving gNB that the UE generates based on HARQ-ACK information that the UE obtains from PSFCH receptions, or from absence of PSFCH receptions. |
|---|
| For SL configured grant Type 1 or Type 2 PSSCH transmissions by a UE within a time period provided by *periodSlCG*, the UE generates one HARQ-ACK information bit in response to the PSFCH receptions to multiplex in a PUCCH transmission occasion that is after a last time resource, in a set of time resources. |
| For each PSFCH reception occasion, from a number of PSFCH reception occasions that the UE generates HARQ-ACK information to report to the gNB in a PUCCH or PUSCH transmission, the UE can be indicated by higher layers to perform one of the following and the UE constructs a HARQ-ACK codeword with HARQ-ACK information, when applicable. |

- generate HARQ-ACK information with same value as a value of HARQ-ACK information the UE determines from a PSFCH reception in the PSFCH reception occasion and, if the UE determines that a PSFCH is not received at the PSFCH reception occasion, generate NACK

- generate ACK when the UE determines ACK from each PSFCH reception for the number of PSFCH reception occasions; otherwise, generate NACK if the UE determines absence of PSFCH reception or determines a NACK value from a PSFCH reception at a corresponding PSFCH reception occasion

- generate ACK when the UE determines absence of PSFCH reception for each PSFCH reception occasion from the number of PSFCH reception occasions; otherwise, generate NACK

| If the UE determines that the number of received PSSCH for a TB exceed the configured maximum number of retransmissions provided by *XXX*, the UE generates ACK. |
|---|
| If the UE transmits a PSFCH in any PSFCH reception occasions, the UE generates NACK. |
| For SL configured grant Type 1 or Type 2 PSSCH transmissions by a UE within a time period provided by *periodSlCG*, if any PSSCH is not transmitted in the time period, the UE generates ACK. If the UE is indicated by higher layers to not receive a PSFCH in response to a PSSCH transmission by the UE, the UE generates ACK. |
| With reference to slots for PUCCH transmissions and for a number of PSFCH reception occasions ending in slot $n$, the UE provides the generated HARQ-ACK information in a PUCCH transmission within slot $n + k$, subject to the overlapping conditions in Clause 9.2.5, where $k$ is a number of slots indicated by a PSFCH-to-HARQ feedback timing indicator field, if present, in a DCI format indicating a slot for PUCCH transmission to report the HARQ-ACK information, or $k$ is provided by *sl-ACKToUL-ACK*. $k$ = 0 corresponds to a last slot for a PUCCH transmission that would overlap with the last PSFCH reception occasion. |
| For a PSSCH reception by a UE that is scheduled by a DCI format, or for a SL configured grant Type 2 PSCCH reception activated by a DCI format, if DCI format indicates PUCCH resource and PSFCH-to-HARQ feedback timing such that timing difference between the PSFCH reception and the |

| PUCCH transmission is the largest configured value, the UE determines that a PUCCH resource is not provided. For a SL configured grant Type 1 PSSCH reception, a PUCCH resource can be provided *PUCCH-SL-Config.* If a PUCCH resource is not provided, the UE does not transmit a PUCCH with generated HARQ-ACK information from PSFCH reception occasions. |
|---|

Table 28 below shows examples related to S-PSS and S-SSS.

[Table 28]

| Proposal 1: S-SSB slot is not included in the SL resource pool. |
|---|

(continued)

| |
|---|
| Regarding the frequency domain location of S-PSS and S-SSS, those two signals in S-SSB are fixed to be located at the center of the PSBCH bandwidth, like as in NR Uu case. Subcarrier number of S-PSS and S-SSS relative to the start of a PSBCH block is [2,3,...,128].<br><br>**Proposal 2:** Subcarrier number of S-PSS and S-SSS relative to the start of a PSBCH block is [2,3,...,128]. The text proposal is provided as TP#1 in Appendix. |

Table 29 below shows embodiments related to the synchronization procedure.

[

Table 29]

| |
|---|
| Synchronization procedure<br><br>It was agreed in RANI #98bis meeting that S-SSB RSRP is used for the selection of the synchronization source when two or more UE synchronization sources have same priority. As for the S-SSB RSRP measurement, PSBCH DM-RS is the most preferred source for S-SSB RSRP measurement as it occupies the largest number of symbols in a S-SSB. In addition, S-SSS can also be used for S-SSB RSRP measurement as it enables for RX UE to differentiate the SL-SSID from each other, which is not the case for S-PSS.<br><br>Proposal 7: For S-SSB RSRP measurement, PSBCH DM-RS and S-SSS can be used as a source. Details are up to UE implementation. |

Table 30 below is an example related to the S-SSB.

[Table 30]

| |
|---|
| **Proposal 9:** Downlink pathloss based S-SSB OLPC is supported. The text proposal is provided as TP#5 in Appendix.<br><br>The S-PSS transmission power is adjusted by applying the amplitude scaling factor on the S-PSS modulation operation.In addition, as the number of REs used for S-PSS and S-SSS are different from that of PSBCH, the relevant factor is used as a power boosting for S-PSS and S-SSS compared to PSBCH.<br><br>Proposal 10: The difference in REs used for SLSS and PSBCH is taken into account for the amplitude scaling factor of S-PSS and S-SSS. The text proposal is as TP#6 in Appendix. |

Table 31 below shows an example of resources in the S-SS/PSBCH block for S-PSS, S-SSS, PSBCH and DM-RS.

[Table 31]

| Channel or signal | OFDM symbol number *l* relative to the start of an S-SS/PSBCH block | Subcarrier number *k* relative to the start of an S-SS/PSBCH block |
|---|---|---|
| S-PSS | 1,2 | 2,3,...,128 |
| S-SSS | 3,4 | 2,3,...,128 |
| PSBCH | $0, 5,6, \ldots, N_{\mathrm{symb}}^{\mathrm{S\text{-}SSB}} - 1$ | 0,1,...,131 |
| DM-RS for PSBCH | $0, 5,6, \ldots, N_{\mathrm{symb}}^{\mathrm{S\text{-}SSB}} - 1$ | 0, 4, 8, ...., 128 |

Table 32 below is an embodiment related to mapping of S-PSS and/or S-SSS in the S-SS/PSBCH block.

[Table 32]

| |
|---|
| 8.4.3.1.1 Mapping of S-PSS within an S-SS/PSBCH block |

(continued)

> The sequence of symbols $d_{\text{S-PSS}}(0),...,d_{\text{S-PSS}}(126)$ constituting the sidelink primary synchronization signal in one OFDM symbol shall be scaled by a factor $\beta_{\text{S-PSS}} = \sqrt{132/127} \cdot \beta_{PSBCH}$ to conform to the S-PSS power allocation specified in [5, TS 38.213] and mapped to resource elements $(k, l)_{p,\mu}$ in increasing order of $k$ in each of the symbols $l$, where $k$ and $l$ are given by Table 8.4.3.1-1 and represent the frequency and time indices, respectively, within one S-SS/PSBCH block.
>
> 8.4.3.1.2 Mapping of S-SSS within an S-SS/PSBCH block
>
> The sequence of symbols $d_{\text{S-SSS}}(0),...,d_{\text{S-SSS}}(126)$ constituting the sidelink secondary synchronization signal in one OFDM symbol shall be scaled by a factor $\beta_{\text{S-SSS}} = \sqrt{132/127} \cdot \beta_{PSBCH}$ to conform to the S-SSS power allocation specified in [5, TS 38.213] and mapped to resource elements $(k, l)_{p,\mu}$ in increasing order of $k$ in each of the symbols $l$, where $k$ and $l$ are given by Table 8.4.3.1-1 and represent the frequency and time indices, respectively, within one S-SS/PSBCH block.

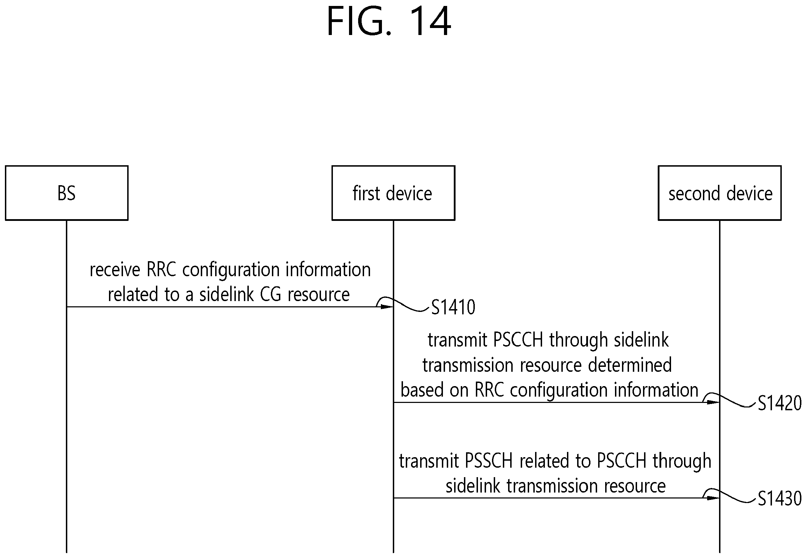

FIG. 14 shows an example of a procedure in which a base station, a first device, and a second device perform wireless communication, based on an embodiment of the present disclosure.

In step S1410, the first device according to an embodiment may receive radio resource control (RRC) configuration information related to a sidelink Configured Grant (CG) resource from a base station.

In step S1420, the first device according to an embodiment may transmit a PSCCH through the sidelink transmission resource determined based on the RRC configuration information.

In step S1430, the first device according to an embodiment may transmit a PSSCH related to the PSCCH through the sidelink transmission resource.

In one embodiment, the RRC configuration information may include a timing offset for determining a first sidelink CG slot and a sidelink resource period of sidelink CG slots periodically allocated by the base station.

In an embodiment, the sidelink transmission resource may be determined in units of the logical slot based on the timing offset and the sidelink resource period.

Hereinafter, various embodiments and/or examples directly or indirectly related to at least one of steps S1410 to S1430 will be described.

Based on an embodiment, in a mode 1 operation in which resource(s) is allocated and transmission is scheduled by a base station in SL communication, the base station may determine resource(s) related to PSCCH, PSSCH, and/or PSFCH to be transmitted by the UE for SL communication and resource(s) related to PUCCH for HARQ feedback to be transmitted by the UE to the base station, and the base station may allocate the determined resource(s) to the UE. For example, the base station may inform the UE of the timing and location of the resource(s) through SL DCI.

For example, in mode 1 operation, a method for the base station to allocate resource(s) to the UE may be as follows.

- Dynamic Grant (DG): The base station may directly and dynamically allocate resource(s) to the UE based on DG.
- Configured Grant (CG) type-1: The base station may allocate periodic transmission resources to the UE through higher layer signaling. For example, the higher layer signaling may be RRC signaling.
- Configured Grant (CG) type-2: the base station may allocate periodic transmission resources to the UE through higher layer signaling, and the base station may dynamically activate or deactivate the periodic transmission resources through DCI. For example, the higher layer signaling may be RRC signaling.

For convenience of description, CG type-1 may be referred to as SL mode-1 CG type-1, and CG type-2 may be referred to as SL mode-1 CG type-2. For convenience of description, SL-related resources allocated by the base station to the UE through SL mode-1 CG type-1 may be referred to as SL mode-1 CG type-1 transmission resources or SL mode-1 CG type-1 resources.

Based on various embodiments of the present disclosure, a method for determining SL transmission resources based on SL mode-1 CG type-1 and an apparatus supporting the same are proposed.

For example, configuration information related to SL mode-1 CG type-1 that the base station configures to the UE through RRC signaling may include the following. For convenience of description, configuration information related to SL mode-1 CG type-1 transmitted by the base station to the UE through RRC signaling may be referred to as RRC configuration or RRC configuration information.

- OFFSET: timing offset for the first (or initial) CG resource
- PERIOD: interval period between CG resources allocated periodically by the base station

For example, the UE may determine SL mode-1 CG type-1 transmission resources as follows based on a time when the UE receiving the RRC configuration confirms the RRC configuration and information included in the RRC configuration.

A) Offset time calculation method: The UE may calculate or determine the OFFSET time based on at least one embodiment below.

For example, within a SFN time period that is periodically repeated every 10240 ms, the UE may calculate or determine a time indicated by the OFFSET from DL reference SFN=0, in units of the physical slot, which is an absolute time, based on the DL numerology.

For example, within a SFN time period that is periodically repeated every 10240 ms, the UE may calculate or determine a time indicated by the OFFSET from DL reference SFN=0, in units of the physical slot, which is an absolute time, based on the SL numerology.

For example, within a SFN time period that is periodically repeated every 10240 ms, the UE may calculate or determine a time indicated by the OFFSET from DL reference SFN=0, in units of the logical slot within a SL resource pool, which is a relative time, based on the SL numerology.

For example, within a DFN time period that is periodically repeated every 10240 ms, the UE may calculate or determine a time indicated by the OFFSET from SL reference DFN=0, in units of the physical slot, which is an absolute time, based on the SL numerology.

For example, within a DFN time period that is periodically repeated every 10240 ms, the UE may calculate or determine a time indicated by OFFSET from SL reference DFN=0, in units of the logical slot within a SL resource pool, which is a relative time, based on the SL numerology.

B) If the OFFSET time calculated or determined by the UE is later than a time when the UE confirms the RRC configuration,

For example, the UE may use a resource in the SL resource pool located at the earliest time after the calculated or determined OFFSET time as the first SL CG type-1 transmission resource. For example, after the first SL CG type-1 resource, the UE may use, as periodic SL CG type-1 resources, resources in the SL resource pool that exists every period separated by the PERIOD interval from the first SL CG type-1 resource in units of the logical slot in terms of the SL resource pool.

C) If the OFFSET time calculated or determined by the UE is earlier than a time when the UE confirms the RRC configuration,

For example, the UE may configure periodic virtual SL CG type-1 resources separated by the PERIOD interval in units of the physical slot, which is an absolute time, based on DL numerology, based on the calculated or determined OFFSET time. In addition, the UE may determine a first virtual SL CG type-1 resource that exists at the earliest time after the time when the RRC configuration is confirmed, from among the periodic virtual SL CG type-1 resources. In addition, the UE may use, as the first SL CG type-1 transmission resource, a resource in the SL resource pool that exists at the earliest time after the first virtual SL CG type-1 resource.

For example, the UE may configure periodic virtual SL CG type-1 resources separated by the PERIOD interval in units of the physical slot, which is an absolute time, based on SL numerology, based on the calculated or determined OFFSET time. In addition, the UE may determine a second virtual SL CG type-1 resource that exists at the earliest time after the time when the RRC configuration is confirmed, from among the periodic virtual SL CG type-1 resources. In addition, the UE may use, as the first SL CG type-1 transmission resource, a resource in the SL resource pool that exists at the earliest time after the second virtual SL CG type-1 resource.

For example, the UE may configure periodic virtual SL CG type-1 resources separated by the PERIOD interval in units of the logical slot within a SL resource pool, which is a relative time, based on the SL numerology, based on the calculated or determined OFFSET time. In addition, the UE may use, as the first SL CG type-1 transmission resource, a third virtual SL CG type-1 resource that exists at the earliest time after the time when the RRC configuration is confirmed, from among the periodic virtual SL CG type-1 resources.

In the above-mentioned case, for example, after the first SL CG type-1 resource, the UE may use, as periodic SL CG type-1 resources, resources in the SL resource pool that exists every period separated by the PERIOD interval from the first SL CG type-1 resource in units of the logical slot in terms of the SL resource pool.

Meanwhile, the base station may not know a time DFN=0. Accordingly, based on an embodiment of the present disclosure, the UE may report information related to a time SFN=0 based on DL timing and information related to a time DFN=0 based on SL timing to the base station. In this case, the base station may calculate or obtain the time DFN=0 by using the time gap between SFN and DFN reported from the UE. Alternatively, the UE may report the time gap between SFN and DFN to the base station. For example, when the base station configures SL CG type-1 resources to the UE through RRC signaling, the base station may determine the time DFN=0 based on the time gap between SFN and DFN reported from the UE. In addition, the base station may configure the OFFSET value for the UE based on the time DFN=0.

For example, depending on the distance between the UE and the base station, DL timing recognized by the UE may differ between UEs in terms of an absolute time (e.g., UTC). For example, DL timing recognized by a UE located far from the base station may be later than DL timing recognized by a UE located close to the base station. In this case, when the base station configures SL CG type-1 resources for the UE through the RRC configuration according to the above-described scheme, the absolute time for SFN=0 or DFN=0 may vary. In addition, due to this, a problem in that CG type-1 transmission resources between UEs do not match may occur. To solve the problem, the SFN=0 or DFN=0 timing recognized by the UE may coincide in proportion to the distance between the base station and the UE.

For example, in the procedure for the UE to determine the first SL CG type-1 resource, the UE may consider and apply a value obtained by dividing a timing advance (TA) value proportional to the distance between the base station and the UE by two. For example, the UE may determine the first SL CG type-1 resource based on a value obtained by dividing a timing advance (TA) value proportional to the distance between the base station and the UE by two.

For example, in the procedure A for determining the OFFSET time, the UE may determine a value obtained by subtracting TA/2 from the calculated OFFSET value as the final OFFSET time. In addition, the UE may determine the first SL CG type-1 transmission resource based on the final OFFSET value. For example, the procedure for the UE to determine SL CG type-1 resources according to the RRC confirmation time compared to the OFFSET time (i.e., procedure B and procedure C) may be applied in the same manner as the above-described method.

For example, in the procedure for determining SL CG type-1 resources, the UE may determine a value obtained by subtracting TA/2 from the RRC confirmation time as the final RRC confirmation time. In this case, the procedure A for calculating the remaining OFFSET time and the procedures B and C for determining SL CG type-1 resources according to the RRC confirmation time compared to the OFFSET time may be applied in the same manner as the above-described method.

For example, in the procedure C for determining the first SL CG type-1 resource, the UE may apply a TA/2 value as follows. Hereinafter, it will be described in detail through the procedure D.

D) If the OFFSET time calculated or determined by the UE is earlier than a time when the UE confirms the RRC configuration,

For example, the UE may configure periodic virtual SL CG type-1 resources separated by the PERIOD interval in units of the physical slot, which is an absolute time, based on DL numerology, based on the calculated or determined OFFSET time. In addition, the UE may determine a fourth virtual SL CG type-1 resource that exists at the earliest time after the RRC configuration is confirmed, from among the periodic virtual SL CG type-1 resources. In addition, the UE may use, as the first SL CG type-1 transmission resource, a resource in the SL resource pool that exists at the earliest time after a time obtained by subtracting the TA/2 value from the fourth virtual SL CG type-1 resource time.

For example, the UE may configure periodic virtual SL CG type-1 resources separated by the PERIOD interval in units of the physical slot, which is an absolute time, based on SL numerology, based on the calculated or determined OFFSET time. In addition, the UE may determine a fifth virtual SL CG type-1 resource that exists at the earliest time after the RRC configuration is confirmed, from among the periodic virtual SL CG type-1 resources. In addition, the UE may use, as the first SL CG type-1 transmission resource, a resource in the SL resource pool that exists at the earliest time after a time obtained by subtracting the TA/2 value from the fifth virtual SL CG type-1 resource time.

For example, the UE may determine the first SL CG type-1 resource based on Equation 5 below.

[Equation 5]

$$\text{Toffset} = (\text{timeDomainOffset} \times \text{numberOfSymbolsPerSlot} + \text{N0} \times \text{periodicity}) \times T_{symbol} - T_{TA}/2$$

Herein, for example, timeDomainOffset may be an OFFSET value expressed by the number of slots. For example, the base station may transmit the RRC configuration including timeDomainOffset to the UE. For example, numberOfSymbolsPerSlot may be the number of symbols per a slot. For example, the periodicity may be a periodic value expressed by the number of symbols. For example, the base station may transmit the RRC configuration including the periodicity to the UE. For example, $T_{symbol}$ may be a symbol duration, and $T_{TA}$ may be a TA value. In this case, N0 may be a minimum integer value that prevents the Toffset value from being earlier than the time when the UE confirms the RRC configuration. In this case, if the periodicity is expressed by the number of physical symbols, the UE may use a resource in the SL resource pool that exists at the earliest time after the Toffset value as the first SL CG type-1 transmission resource. Or, if the periodicity is expressed by the number of logical symbols included in the SL resource pool, the UE may use a resource in the SL resource pool corresponding to the Toffset value as the first SL CG type-1 transmission resource.

For example, in the case of a carrier for which TDD multiplexing is configured between SL and Uu link, in order to perform DL reception or SL reception after the UE performs SL transmission, the UE needs to switch RF chains. Herein, in order to secure a time required for the UE to switch the RF chains, the UE may determine timing that is earlier than DL transmission timing of a serving cell by a specific time as SL transmission timing. For example, the UE may determine a time earlier than the DL transmission timing of the serving cell by the 'TA + TA offset' as the SL transmission timing. For example, the UE may determine/obtain the SL transmission timing based on Equation 6 below.

[Equation 6]

$$\text{SL transmission timing} = \text{DL transmission timing of serving cell} - (\text{TA} + \text{TA offset})$$

In this case, when the base station configures/transmits the TA offset to the UE, the UE may not expect another SL reception or DL reception during the TA offset time after completing SL transmission. For example, when the base station configures/transmits the TA offset to the UE, the UE that has completed SL transmission may not perform SL reception during the TA offset time. For example, when the base station configures/transmits the TA offset to the UE, the UE that has completed SL transmission may not perform DL reception during the TA offset time.

For example, in the case of a carrier for which frequency division duplex (FDD) multiplexing is configured between SL and Uu link, and when the base station configures/transmits the TA offset to the UE, the UE may perform the following operations to determine SL transmission timing.

1) When the base station configures/transmits the TA offset to the UE, the UE may determine the SL transmission timing to be advanced by the 'TA + TA offset' time from the DL transmission timing. For example, the UE may determine/obtain the SL transmission timing based on Equation 6.

2) Even when the base station configures/transmits the TA offset to the UE, since the UE supports two or more RF chains for a carrier for which FDD multiplexing is configured, the UE may not advance the SL transmission timing by applying the separate TA offset to the SL transmission timing.

3) When the base station configures/transmits the TA offset to the UE, the UE may not apply the TA offset set by the base station as it is. Specifically, for example, the UE may determine the SL transmission timing by applying a pre-defined or pre-configured (independent) TA offset value. For example, the UE may determine the SL transmission timing by advancing the SL transmission time by a pre-defined or pre-configured specific ratio among TA offset values configured by the base station.

For example, in a situation where SL communication (e.g., communication between UEs) and Uu link communication (e.g., communication between UE and base station) share a carrier, a PDCCH monitoring occasion for Uu link and a PDCCH monitoring occasion for SL may both exist in the same slot on the same carrier. In this case, for example, a search space for SL may be the same as a search space for Uu link. Or, for example, a search space for SL may partially overlap a search space for Uu link. Or, for example, a search space for Uu link may be the same as a search space for SL. Or, for example, a search space for Uu link may partially overlap a search space for SL.

In the above case, the UE may not expect to simultaneously receive a PDCCH including a DL grant and a PDCCH including a SL grant, from the base station, in the same PDCCH monitoring occasion on the same scheduling cell. For example, the UE may determine that the base station does not simultaneously transmit the PDCCH including the DL grant and the PDCCH including the SL grant in the same PDCCH monitoring occasion on the same scheduling cell. In this case, for example, the DL grant may be DG. For example, the DL grant may be CG type-2. For example, the DL grant may include DG and CG type-2. For example, the SL grant may be DG. For example, the SL grant may be CG type-2. For example, the SL grant may include DG and CG type-2.

For example, in the above-described case, a search space for a Uu DCI format and a search space for a SL DCI format may overlap. In this case, if at least one Uu DCI format among the corresponding Uu DCI formats is associated with the same CORESET as the SL DCI format, the base station may align the size of the corresponding Uu DCI format and the size of the SL DCI format. For example, the base station may align the size of the Uu DCI format and the size of the SL DCI format by performing zero padding for a DCI having a smaller size among Uu DCI and SL DCI. For example, the base station may align the size of the Uu DCI format and the size of the SL DCI format by performing truncation for a DCI having a larger size among Uu DCI or SL DCI.

For example, CORESETs with which the Uu DCI format and the SL DCI format are associated may be different from each other. Even in this case, if the search spaces related to the Uu DCI format and the SL DCI format overlap each other, the base station may align the size of the corresponding Uu DCI format and the size of the SL DCI format.

For example, the base station may align the size of the Uu DCI format and the size of the SL DCI format by performing zero padding for a DCI having a smaller size among Uu DCI and SL DCI. For example, the base station may align the size of the Uu DCI format and the size of the SL DCI format by performing truncation for a DCI having a larger size among Uu DCI or SL DCI.

For example, the UE may not expect that the size of all Uu DCI formats is smaller than the size of the SL DCI format in the search space satisfying the above-mentioned condition. For example, the UE may expect or determine that the size of at least one Uu DCI format is greater than or equal to the size of the SL DCI format in the search space satisfying the above-described condition.

In a situation in which SL communication and Uu link communication share a carrier, if both a PDCCH monitoring occasion for Uu link and a PDCCH monitoring occasion for SL exist in the same slot on the same carrier, a search space for SL may be the same as or partially overlap with a search space for Uu link, or a search space for Uu link may be the same as or partially overlap with a search space for SL.

In this case, the UE may not expect to simultaneously receive a PDCCH through which a DL grant is transmitted and a PDCCH through which a SL grant is transmitted on the same PDCCH monitoring occasion in the same scheduling cell. In this case, the DL grant may be a dynamic grant or a configured grant type-2 or both, and the SL grant may be a dynamic grant or a configured grant type-2 or both.

In the above condition, if the search space for the Uu DCI format and the search space for the SL DCI format overlap, and if at least one Uu DCI format among the corresponding Uu DCI formats is related to the same CORESET as the SL DCI format, size alignment may be performed between the corresponding Uu DCI format and the SL DCI format.

Or, even if CORESETs related to the Uu DCI format and the SL DCI format are different, size alignment between the corresponding Uu DCI format and the SL DCI format is performed if the search spaces related to the Uu DCI format and the SL DCI format overlap each other.

Or, the UE may not expect that the size of all Uu DCI formats in the search space satisfying the above condition is smaller than the size of the SL DCI format. That is, it can be expected that at least one Uu DCI format size is greater than or equal to the SL DCI format size.

If the base station allocates CG resources for SL communication, the base station may set a HARQ process ID and NDI to indicate which TB transmission the CG resources are used for. In this case, resources for the UE to perform initial transmission and retransmission for the same TB through CG resources may be limited to the initial transmission resource and the retransmission resource having the same HARQ process ID and NDI value. For example, if the UE performs initial transmission for a TB by using a specific resource among CG resources, the UE may perform retransmission for the TB by using CG resource(s) having the same HARQ process ID and NDI as the specific resource. The UE may use CG resources belonging to one period for initial transmission and retransmission for the same TB according to a time period pre-configured/defined or configured by a higher layer.

For example, the time period may be one situation and/or occasion including CG resources for initial transmission and retransmission, or a period including situations and/or occasions. Or, the time period may be the same as the period in which the PUCCH resource is allocated by the base station.

In this case, the base station may set different HARQ process IDs for each period, or may toggle the NDI value for different periods while having the same HARQ process ID. In terms of UE operation, when indicating SL transmission resource(s) through SCI, the HARQ process ID may be set to a different value for each time period, or an operation of toggling the NDI value while having the same HARQ process ID may be performed.

Based on the operation, if the UE fails to transmit a specific TB within the time period, the UE may transmits HARQ NACK to the base station through a PUCCH, and the UE may be allocated additional retransmission resource(s) from the base station through DG. In this case, the UE may perform additional retransmission for successful TB transmission only through resource(s) allocated through the DG.

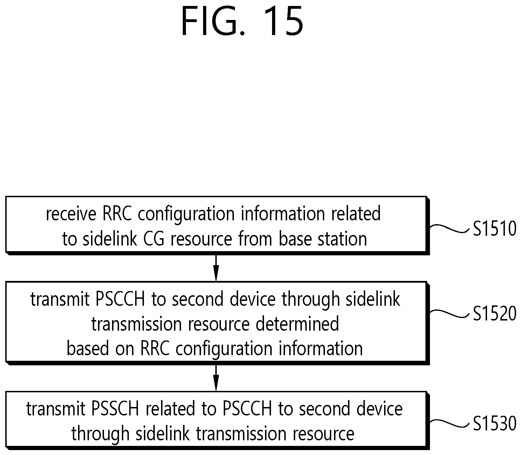

FIG. 15 is a flowchart illustrating an operation of a first device, based on an embodiment of the present disclosure.

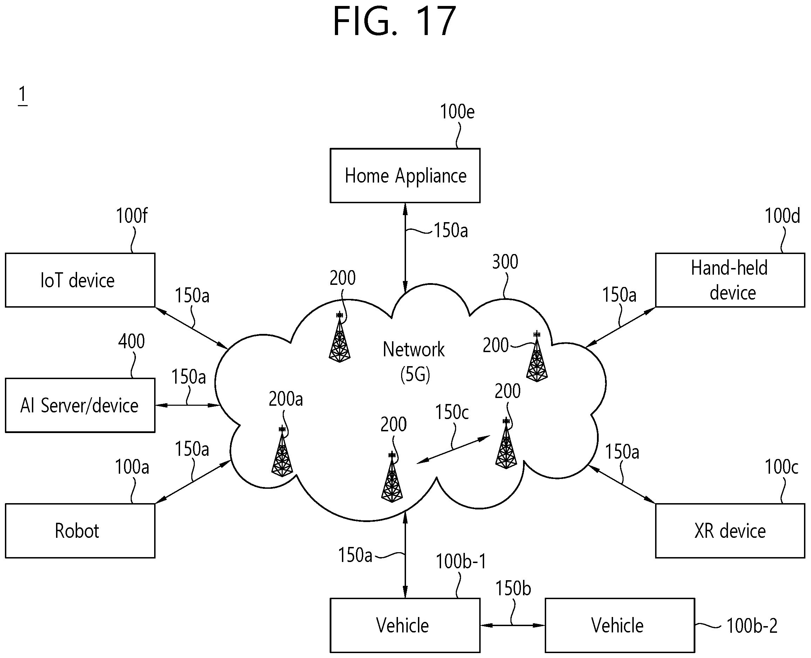

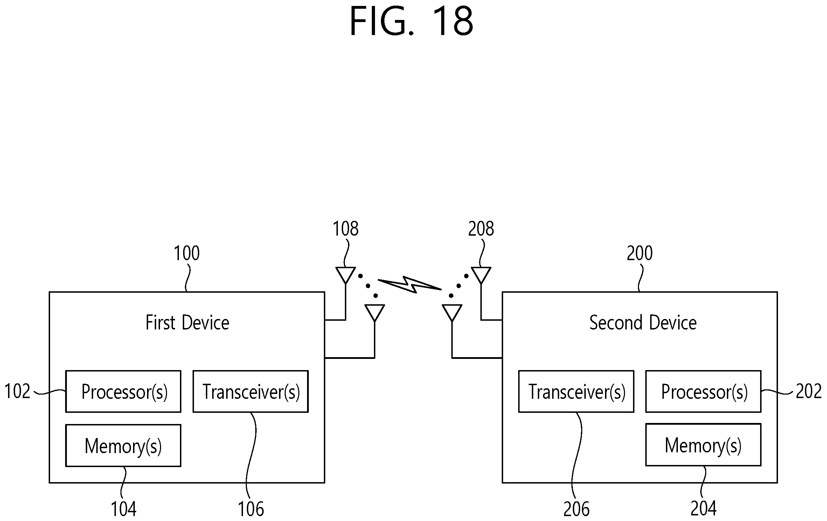

The operations disclosed in the flowchart of FIG. 15 may be performed in combination with various embodiments of the present disclosure. In one example, the operations disclosed in the flowchart of FIG. 15 may be performed based on at least one of the devices illustrated in FIGs. 17 to 22. In one example, the first device of FIG. 15 may correspond to the first wireless device 100 of FIG. 18 to be described later. In another example, the first device of FIG. 15 may correspond to the second wireless device 200 of FIG. 18 to be described later.

In step S1510, the first device according to an embodiment may receive Radio Resource Control (RRC) configuration information related to a sidelink Configured Grant (CG) resource from a base station.

In step S1520, the first device according to an embodiment may transmit a Physical Sidelink Control Channel (PSCCH) to a second device through a sidelink transmission resource determined based on the RRC configuration information.

In step S1530, the first device according to an embodiment may transmit a Physical Sidelink Shared Channel (PSSCH) related to the PSCCH to the second device through the sidelink transmission resource.

In one embodiment, the RRC configuration information may include a timing offset for determining a first sidelink CG slot and a sidelink resource period of sidelink CG slots periodically allocated by the base station.

In one embodiment, the timing offset may be the same as, similar to, or correspond to the OFFSET described above in FIG. 14. In addition, the sidelink resource period may be the same as, similar to, or correspond to the PERIOD described above in FIG. 14.

In an embodiment, the sidelink transmission resource may be determined in a unit of a logical slot based on the timing offset and the sidelink resource period.

In one embodiment, the first sidelink CG slot may be determined based on a first time when the timing offset in the unit of the logical slot according to sidelink numerology is added to a time when System Frame Number (SFN) is 0.

In one embodiment, the RRC configuration information transmitted from the base station may be decoded (or confirmed) at a second time by the first device. Based on the first time being later than the second time, the first sidelink CG slot that occurs initially may be determined as the first logical slot among logical sidelink CG slots after the first time or at the first time.

In one embodiment, the RRC configuration information transmitted from the base station may be decoded at a third time by the first device. Based on the first time being earlier than the third time, the first sidelink CG slot that occurs initially may be determined as the first logical slot after the third time or at the third time among logical sidelink CG slots after a fourth time or at the fourth time when the sidelink resource period in the unit of the logical slot according to the sidelink numerology is added to the first time.

In one embodiment, the RRC configuration information may be related to a sidelink CG type-1 resource. The sidelink CG type-1 resource may be determined without considering Downlink Control Information (DCI) received from the base station.

In one embodiment, the sidelink transmission resource may be determined by additionally considering a timing advance (TA). The TA may be information transmitted from the base station to the first device to adjust a transmission timing of the first device.

In one embodiment, the first sidelink CG slot that occurs initially may be determined based on a fifth time, which is a time obtained by subtracting (TA/2) from a time obtained by adding the timing offset in the unit of the logical slot according to sidelink numerology to a time when SFN is 0.

In one embodiment, the RRC configuration information transmitted from the base station may be decoded at a sixth time by the first device. Based on the fifth time being later than the sixth time, the first sidelink CG slot that occurs initially may be determined as the first logical slot among logical sidelink CG slots after the fifth time or at the fifth time.

In one embodiment, the RRC configuration information transmitted from the base station may be decoded at a seventh time by the first device. Based on the fifth time being earlier than the seventh time, the first sidelink CG slot that occurs initially may be determined as the first logical slot after the seventh time or at the seventh time among logical sidelink CG slots after an eighth time or at the eighth time when the sidelink resource period in the unit of the logical slot according to the sidelink numerology is added to the fifth time. In one embodiment, the sidelink transmission resource may be determined by additionally considering a timing advance (TA). The TA may be information transmitted from the base station to the first device to adjust a transmission timing of the first device. The RRC configuration information transmitted from the base station may be decoded at a ninth time by the first device. Based on the first time being earlier than the ninth time, the first sidelink CG slot that occurs initially may be determined as the first logical slot among logical sidelink CG slots after an eleventh time obtained by subtracting (TA/2) from a tenth time. The tenth time may be a time corresponding the first logical slot after the ninth time or at the ninth time among logical sidelink CG slots after a twelfth time or at the twelfth time when the sidelink resource period in the unit of the logical slot according to the sidelink numerology is added to the first time.

In one embodiment, the sidelink transmission resource may be determined by additionally considering a timing advance (TA), and the TA may be information transmitted from the base station to the first device to adjust a transmission timing of the first device. The RRC configuration information transmitted from the base station may be decoded at a thirteenth time by the first device, and the RRC configuration information may be determined by the first device to be decoded at a fourteenth time obtained by subtracting (TA/2) from the thirteenth time. Based on the first time being later than the fourteenth time, the first sidelink CG slot that occurs initially may be determined as the first logical slot among logical sidelink CG slots after the first time or at the first time.

In one embodiment, the sidelink transmission resource may be determined by additionally considering a timing advance (TA), and the TA may be information transmitted from the base station to the first device to adjust a transmission timing of the first device. The RRC configuration information transmitted from the base station may be decoded at a fifteenth time by the first device, and the RRC configuration information may be determined by the first device to be decoded at a sixteenth time obtained by subtracting (TA/2) from the fifteenth time. Based on the first time being earlier than the sixteenth time, the first sidelink CG slot that occurs initially may be determined as the first logical slot after the sixteenth time or at the sixteenth time among logical sidelink CG slots after a seventeenth time or at the seventeenth time when the sidelink resource period in the unit of the logical slot according to the sidelink numerology is added to the first time.

Based on an embodiment of the present disclosure, a first device configured to perform wireless communication may be provided. The first device may comprise: at least one memory storing instructions; at least one transceiver; and at least one processor connected to the at least one memory and the at least one transceiver, wherein the at least one processor executes the instructions to: control the at least one transceiver to receive, from a base station, Radio Resource Control (RRC) configuration information related to a sidelink Configured Grant (CG) resource; control the at least one transceiver to transmit, to a second device, a Physical Sidelink Control Channel (PSCCH) through a sidelink transmission resource determined based on the RRC configuration information; and control the at least one transceiver to transmit, to the second device, a Physical Sidelink Shared Channel (PSSCH) related to the PSCCH through the sidelink transmission resource, wherein the RRC configuration information includes a timing offset for determining a first sidelink CG slot and a sidelink resource period of sidelink CG slots periodically allocated by the base station, and wherein the sidelink transmission resource is determined based on the timing offset and the sidelink resource period in a unit of a logical slot.

Based on an embodiment of the present disclosure, an apparatus (or a chip (set)) configured to control a first user equipment (UE) may be provided. The apparatus may comprise: at least one processor; and at least one memory connected to the at least one processor and storing instructions, wherein the at least one processor executes the instructions to: receive, from a base station, Radio Resource Control (RRC) configuration information related to a sidelink Configured Grant (CG) resource; transmit, to a second device, a Physical Sidelink Control Channel (PSCCH) through a sidelink transmission resource determined based on the RRC configuration information; and transmit, to the second device, a Physical Sidelink Shared Channel (PSSCH) related to the PSCCH through the sidelink transmission resource, wherein the RRC configuration information includes a timing offset for determining a first sidelink CG slot and a sidelink resource period of sidelink CG slots periodically allocated by the base station, and wherein the sidelink transmission resource is determined based on the timing offset and the sidelink resource period in a unit of a logical slot.

In one example, the first UE of the embodiment may refer to the first device described throughout the present disclosure. In one example, the at least one processor, the at least one memory and the like -in the device for controlling the first UE- may be implemented as separate sub-chips, respectively, alternatively, at least two or more components may be implemented through one sub-chip.

Based on an embodiment of the present disclosure, a non-transitory computer-readable storage medium storing instructions (or commands) may be provided. The non-transitory computer-readable storage medium, when the instructions are executed, causes a first device to: receive, from a base station, Radio Resource Control (RRC) configuration information related to a sidelink Configured Grant (CG) resource; transmit, to a second device, a Physical Sidelink Control Channel (PSCCH) through a sidelink transmission resource determined based on the RRC configuration information; and transmit, to the second device, a Physical Sidelink Shared Channel (PSSCH) related to the PSCCH through the sidelink transmission resource, wherein the RRC configuration information includes a timing offset for determining a first sidelink CG slot and a sidelink resource period of sidelink CG slots periodically allocated by the base station, and wherein the sidelink transmission resource is determined based on the timing offset and the sidelink resource period in a unit of a logical slot.

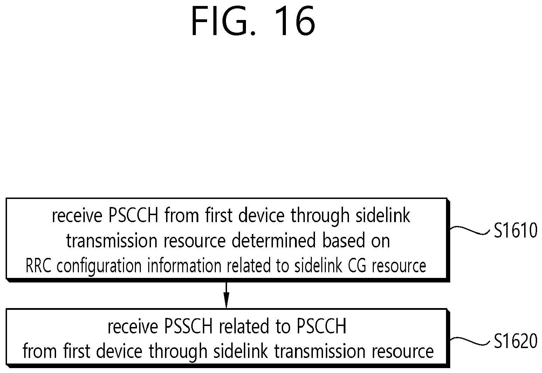

FIG. 16 is a flowchart illustrating an operation of a second device, based on an embodiment of the present disclosure.

The operations disclosed in the flowchart of FIG. 16 may be performed in combination with various embodiments of the present disclosure. In one example, the operations disclosed in the flowchart of FIG. 16 may be performed based on at least one of the devices illustrated in FIGs. 17 to 22. In one example, the second device of FIG. 16 may correspond to the second wireless device 200 of FIG. 18 to be described later. In another example, the second device of FIG. 16 may correspond to the first wireless device 100 of FIG. 18 to be described later.

In step S1610, the second device according to an embodiment may receive a PSCCH from a first device through a sidelink transmission resource determined based on RRC configuration information related to a sidelink CG resource.

In step S1620, the second device according to an embodiment may receive a PSSCH related to the PSCCH from the first device through the sidelink transmission resource.

In an embodiment, the RRC configuration information may be transmitted from a base station and received by the first device.

In one embodiment, the RRC configuration information may include a timing offset for determining a first sidelink CG slot and a sidelink resource period of sidelink CG slots periodically allocated by the base station.

In one embodiment, the sidelink transmission resource may be determined in a unit of a logical slot based on the timing offset and the sidelink resource period.

In one embodiment, the first sidelink CG slot may be determined based on a first time when the timing offset in the unit of the logical slot according to sidelink numerology is added to a time when System Frame Number (SFN) is 0.

In one embodiment, the RRC configuration information transmitted from the base station may be decoded at a second time by the first device. Based on the first time being later than the second time, the first sidelink CG slot that occurs initially may be determined as the first logical slot among logical sidelink CG slots after the first time or at the first time.

In one embodiment, the RRC configuration information transmitted from the base station may be decoded at a third time by the first device. Based on the first time being earlier than the third time, the first sidelink CG slot that occurs initially may be determined as the first logical slot after the third time or at the third time among logical sidelink CG slots after a fourth time or at the fourth time when the sidelink resource period in the unit of the logical slot according to the sidelink numerology is added to the first time.

In one embodiment, the RRC configuration information may be related to a sidelink CG type-1 resource. The sidelink CG type-1 resource may be determined without considering Downlink Control Information (DCI) received from the base station.

In one embodiment, the sidelink transmission resource may be determined by additionally considering a timing advance (TA). The TA may be information transmitted from the base station to the first device to adjust a transmission timing of the first device.

In one embodiment, the first sidelink CG slot that occurs initially may be determined based on a fifth time, which is a time obtained by subtracting (TA/2) from a time obtained by adding the timing offset in the unit of the logical slot according to sidelink numerology to a time when SFN is 0.

In one embodiment, the RRC configuration information transmitted from the base station may be decoded at a sixth time by the first device. Based on the fifth time being later than the sixth time, the first sidelink CG slot that occurs initially may be determined as the first logical slot among logical sidelink CG slots after the fifth time or at the fifth time.

In one embodiment, the RRC configuration information transmitted from the base station may be decoded at a seventh time by the first device. Based on the fifth time being earlier than the seventh time, the first sidelink CG slot that occurs initially may be determined as the first logical slot after the seventh time or at the seventh time among logical sidelink CG slots after an eighth time or at the eighth time when the sidelink resource period in the unit of the logical slot according to the sidelink numerology is added to the fifth time.

In one embodiment, the sidelink transmission resource may be determined by additionally considering a timing advance (TA). The TA may be information transmitted from the base station to the first device to adjust a transmission timing of the first device. The RRC configuration information transmitted from the base station may be decoded at a ninth time by the first device. Based on the first time being earlier than the ninth time, the first sidelink CG slot that occurs initially may be determined as the first logical slot among logical sidelink CG slots after an eleventh time obtained by subtracting (TA/2) from a tenth time. The tenth time may be a time corresponding the first logical slot after the ninth time or at the ninth time among logical sidelink CG slots after a twelfth time or at the twelfth time when the sidelink resource period in the unit of the logical slot according to the sidelink numerology is added to the first time.

In one embodiment, the sidelink transmission resource may be determined by additionally considering a timing advance (TA), and the TA may be information transmitted from the base station to the first device to adjust a transmission timing of the first device. The RRC configuration information transmitted from the base station may be decoded at a thirteenth time by the first device, and the RRC configuration information may be determined by the first device to be decoded at a fourteenth time obtained by subtracting (TA/2) from the thirteenth time. Based on the first time being later than the fourteenth time, the first sidelink CG slot that occurs initially may be determined as the first logical slot among logical sidelink CG slots after the first time or at the first time.

In one embodiment, the sidelink transmission resource may be determined by additionally considering a timing advance (TA), and the TA may be information transmitted from the base station to the first device to adjust a transmission timing of the first device. The RRC configuration information transmitted from the base station may be decoded at a fifteenth time by the first device, and the RRC configuration information may be determined by the first device to be decoded at a sixteenth time obtained by subtracting (TA/2) from the fifteenth time. Based on the first time being earlier than the sixteenth time, the first sidelink CG slot that occurs initially may be determined as the first logical slot after the sixteenth time or at the sixteenth time among logical sidelink CG slots after a seventeenth time or at the seventeenth time when the sidelink resource period in the unit of the logical slot according to the sidelink numerology is added to the first time.

Based on an embodiment of the present disclosure, a second device configured to perform wireless communication may be provided. The second device may comprise: at least one memory storing instructions; at least one transceiver; and at least one processor connected to the at least one memory and the at least one transceiver, wherein the at least one processor executes the instructions to: control the at least one transceiver to receive, from a first device, a PSCCH through a sidelink transmission resource determined based on RRC configuration information related to a sidelink CG resource; and control the at least one transceiver to receive, from the first device, a PSSCH related to the PSCCH through the sidelink transmission resource, wherein the RRC configuration information is transmitted from the base station and received by the first device, wherein the RRC configuration information includes a timing offset for determining a first sidelink CG slot and a sidelink resource period of sidelink CG slots periodically allocated by the base station, and wherein the sidelink transmission resource is determined in a unit of a logical slot based on the timing offset and the sidelink resource period.

Various embodiments of the present disclosure may be independently implemented. Alternatively, the various embodiments of the present disclosure may be implemented by being combined or merged. For example, although the various embodiments of the present disclosure have been described based on the 3GPP LTE system for convenience of explanation, the various embodiments of the present disclosure may also be extendedly applied to another system other than the 3GPP LTE system. For example, the various embodiments of the present disclosure may also be used in an uplink or downlink case without being limited only to direct communication between UEs. In this case, a base station, a relay node, or the like may use the proposed method according to various embodiments of the present disclosure. For example, it may be defined that information on whether to apply the method according to various embodiments of the present disclosure is reported by the base station to the UE or by a transmitting UE to a receiving UE through pre-defined signaling (e.g., physical layer signaling or higher layer signaling). For example, it may be defined that information on a rule according to various embodiments of the present disclosure is reported by the base station to the UE or by a transmitting UE to a receiving UE through pre-defined signaling (e.g., physical layer signaling or higher layer signaling). For example, some embodiments among various embodiments of the present disclosure may be applied limitedly only to a resource allocation mode 1. For example, some embodiments among various embodiments of the present disclosure may be applied limitedly only to a resource allocation mode 2.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 17 shows a communication system 1, based on an embodiment of the present disclosure.

Referring to FIG. 17, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Herein, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB 1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 18 shows wireless devices, based on an embodiment of the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

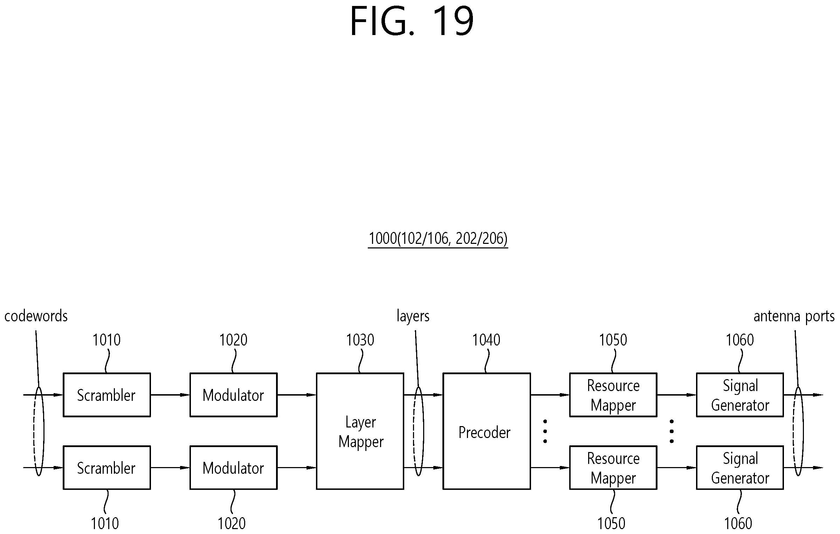

FIG. 19 shows a signal process circuit for a transmission signal, based on an embodiment of the present disclosure.

Referring to FIG. 19, a signal processing circuit 1000 may include scramblers 1010, modulators 1020, a layer mapper 1030, a precoder 1040, resource mappers 1050, and signal generators 1060. An operation/function of FIG. 19 may be performed, without being limited to, the processors 102 and 202 and/or the transceivers 106 and 206 of FIG. 18. Hardware elements of FIG. 19 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 19. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 19. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

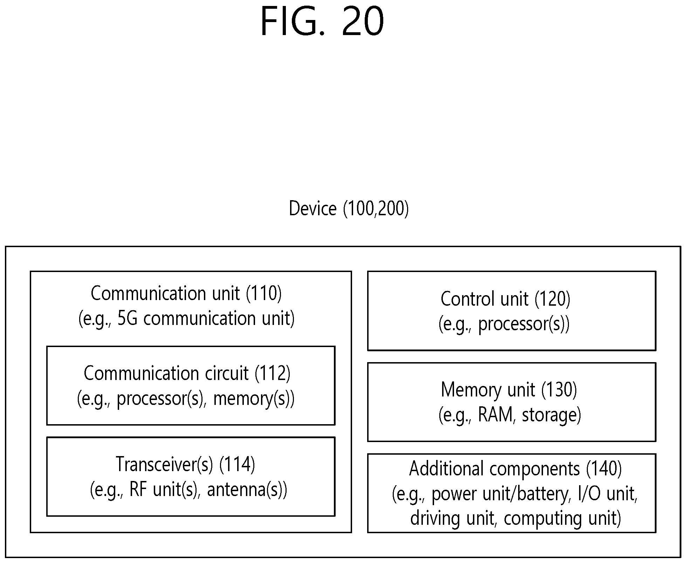

FIG. 20 shows another example of a wireless device, based on an embodiment of the present disclosure. The wireless device may be implemented in various forms according to a use-case/service (refer to FIG. 17).

Referring to FIG. 20, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 20 will be described in detail with reference to the drawings.

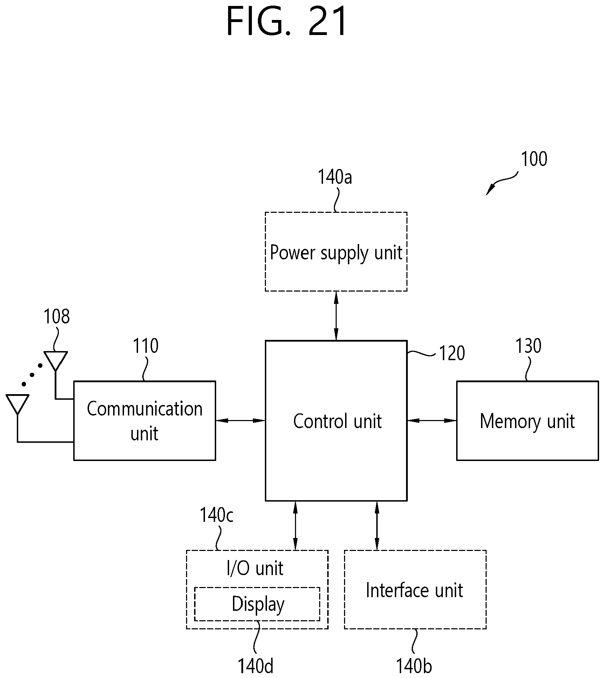

FIG. 21 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 21, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 20, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

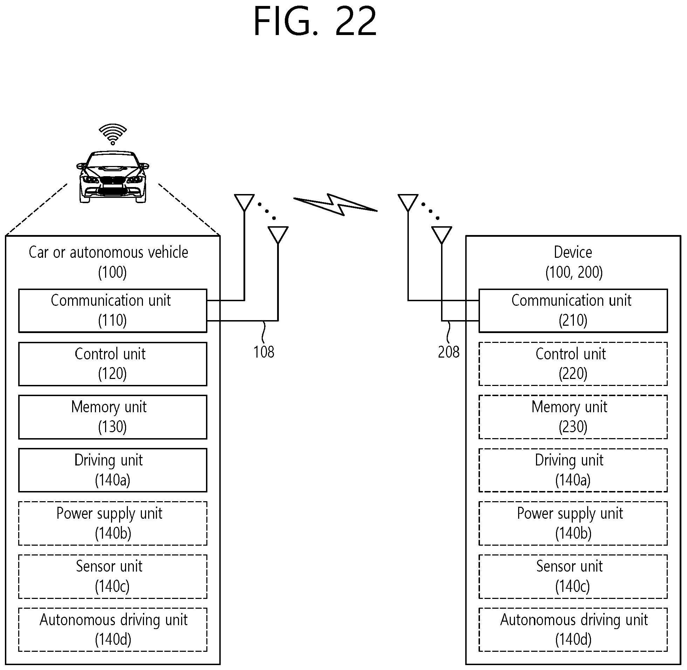

FIG. 22 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc.

Referring to FIG. 22, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

The scope of the disclosure may be represented by the following claims, and it should be construed that all changes or modifications derived from the meaning and scope of the claims and their equivalents may be included in the scope of the disclosure.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1.    A method for performing wireless communication by a first device, the method comprising:

    receiving, from a base station, Radio Resource Control (RRC) configuration information related to a sidelink Configured Grant (CG) resource;
    transmitting, to a second device, a Physical Sidelink Control Channel (PSCCH) through a sidelink transmission resource determined based on the RRC configuration information; and
    transmitting, to the second device, a Physical Sidelink Shared Channel (PSSCH) related to the PSCCH through the sidelink transmission resource,
    wherein the RRC configuration information includes a timing offset for determining a first sidelink CG slot and a sidelink resource period of sidelink CG slots periodically allocated by the base station, and
    wherein the sidelink transmission resource is determined based on the timing offset and the sidelink resource period in a unit of a logical slot.

2.    The method of claim 1, wherein the first sidelink CG slot is determined based on a first time when the timing offset in the unit of the logical slot according to sidelink numerology is added to a time when System Frame Number (SFN) is 0.

3.    The method of claim 2, wherein the RRC configuration information transmitted from the base station is decoded at a second time by the first device, and
    wherein, based on the first time being later than the second time, the first sidelink CG slot that occurs initially is determined as the first logical slot among logical sidelink CG slots after the first time or at the first time.

4.    The method of claim 2, wherein the RRC configuration information transmitted from the base station is decoded at a third time by the first device, and
    wherein, based on the first time being earlier than the third time, the first sidelink CG slot that occurs initially is determined as the first logical slot after the third time or at the third time among logical sidelink CG slots after a fourth time or at the fourth time when the sidelink resource period in the unit of the logical slot according to the sidelink numerology is added to the first time.

5.    The method of claim 1, wherein the RRC configuration information is related to a sidelink CG type-1 resource, and
    wherein the sidelink CG type-1 resource is determined without considering Downlink Control Information (DCI) received from the base station.

6.    The method of claim 1, wherein the sidelink transmission resource is determined by additionally considering a timing advance (TA), and
    wherein the TA is information transmitted from the base station to the first device to adjust a transmission timing of the first device.

7. The method of claim 6, wherein the first sidelink CG slot that occurs initially is determined based on a fifth time, which is a time obtained by subtracting (TA/2) from a time obtained by adding the timing offset in the unit of the logical slot according to sidelink numerology to a time when SFN is 0.

8. The method of claim 7, wherein the RRC configuration information transmitted from the base station is decoded at a sixth time by the first device, and
wherein, based on the fifth time being later than the sixth time, the first sidelink CG slot that occurs initially is determined as the first logical slot among logical sidelink CG slots after the fifth time or at the fifth time.

9. The method of claim 7, wherein the RRC configuration information transmitted from the base station is decoded at a seventh time by the first device, and
wherein, based on the fifth time being earlier than the seventh time, the first sidelink CG slot that occurs initially is determined as the first logical slot after the seventh time or at the seventh time among logical sidelink CG slots after an eighth time or at the eighth time when the sidelink resource period in the unit of the logical slot according to the sidelink numerology is added to the fifth time.

10. The method of claim 2, wherein the sidelink transmission resource is determined by additionally considering a timing advance (TA),

wherein the TA is information transmitted from the base station to the first device to adjust a transmission timing of the first device,
wherein the RRC configuration information transmitted from the base station is decoded at a ninth time by the first device,
wherein, based on the first time being earlier than the ninth time, the first sidelink CG slot that occurs initially is determined as the first logical slot among logical sidelink CG slots after an eleventh time obtained by subtracting (TA/2) from a tenth time, and
wherein the tenth time is a time corresponding the first logical slot after the ninth time or at the ninth time among logical sidelink CG slots after a twelfth time or at the twelfth time when the sidelink resource period in the unit of the logical slot according to the sidelink numerology is added to the first time.

11. The method of claim 2, wherein the sidelink transmission resource is determined by additionally considering a timing advance (TA),

wherein the TA is information transmitted from the base station to the first device to adjust a transmission timing of the first device,
wherein the RRC configuration information transmitted from the base station is decoded at a thirteenth time by the first device,
wherein the RRC configuration information is determined by the first device to be decoded at a fourteenth time obtained by subtracting (TA/2) from the thirteenth time, and
wherein, based on the first time being later than the fourteenth time, the first sidelink CG slot that occurs initially is determined as the first logical slot among logical sidelink CG slots after the first time or at the first time.

12. The method of claim 2, wherein the sidelink transmission resource is determined by additionally considering a timing advance (TA),

wherein the TA is information transmitted from the base station to the first device to adjust a transmission timing of the first device,
wherein the RRC configuration information transmitted from the base station is decoded at a fifteenth time by the first device,
wherein the RRC configuration information is determined by the first device to be decoded at a sixteenth time obtained by subtracting (TA/2) from the fifteenth time,
wherein, based on the first time being earlier than the sixteenth time, the first sidelink CG slot that occurs initially is determined as the first logical slot after the sixteenth time or at the sixteenth time among logical sidelink CG slots after a seventeenth time or at the seventeenth time when the sidelink resource period in the unit of the logical slot according to the sidelink numerology is added to the first time.

13. A first device configured to perform wireless communication, the first device comprising:

at least one memory storing instructions;

at least one transceiver; and

at least one processor connected to the at least one memory and the at least one transceiver, wherein the at least one processor executes the instructions to:

control the at least one transceiver to receive, from a base station, Radio Resource Control (RRC) configuration information related to a sidelink Configured Grant (CG) resource;

control the at least one transceiver to transmit, to a second device, a Physical Sidelink Control Channel (PSCCH) through a sidelink transmission resource determined based on the RRC configuration information; and

control the at least one transceiver to transmit, to the second device, a Physical Sidelink Shared Channel (PSSCH) related to the PSCCH through the sidelink transmission resource,

wherein the RRC configuration information includes a timing offset for determining a first sidelink CG slot and a sidelink resource period of sidelink CG slots periodically allocated by the base station, and

wherein the sidelink transmission resource is determined based on the timing offset and the sidelink resource period in a unit of a logical slot.

**14.** An apparatus configured to control a first user equipment (UE), the apparatus comprising:

at least one processor; and

at least one memory connected to the at least one processor and storing instructions, wherein the at least one processor executes the instructions to:

receive, from a base station, Radio Resource Control (RRC) configuration information related to a sidelink Configured Grant (CG) resource;

transmit, to a second device, a Physical Sidelink Control Channel (PSCCH) through a sidelink transmission resource determined based on the RRC configuration information; and

transmit, to the second device, a Physical Sidelink Shared Channel (PSSCH) related to the PSCCH through the sidelink transmission resource,

wherein the RRC configuration information includes a timing offset for determining a first sidelink CG slot and a sidelink resource period of sidelink CG slots periodically allocated by the base station, and

wherein the sidelink transmission resource is determined based on the timing offset and the sidelink resource period in a unit of a logical slot.

**15.** A non-transitory computer-readable storage medium storing instructions that, when executed, cause a first device to:

receive, from a base station, Radio Resource Control (RRC) configuration information related to a sidelink Configured Grant (CG) resource;

transmit, to a second device, a Physical Sidelink Control Channel (PSCCH) through a sidelink transmission resource determined based on the RRC configuration information; and

transmit, to the second device, a Physical Sidelink Shared Channel (PSSCH) related to the PSCCH through the sidelink transmission resource,

wherein the RRC configuration information includes a timing offset for determining a first sidelink CG slot and a sidelink resource period of sidelink CG slots periodically allocated by the base station, and

wherein the sidelink transmission resource is determined based on the timing offset and the sidelink resource period in a unit of a logical slot.

**16.** A method for performing wireless communication by a second device, the method comprising:

receiving, from a first device, a PSCCH through a sidelink transmission resource determined based on RRC configuration information related to a sidelink CG resource; and

receiving, from the first device, a PSSCH related to the PSCCH through the sidelink transmission resource,

wherein the RRC configuration information is transmitted from the base station and received by the first device,

wherein the RRC configuration information includes a timing offset for determining a first sidelink CG slot and a sidelink resource period of sidelink CG slots periodically allocated by the base station, and

wherein the sidelink transmission resource is determined in a unit of a logical slot based on the timing offset and the sidelink resource period.

17. The method of claim 16, wherein the first sidelink CG slot is determined based on a first time when the timing offset in the unit of the logical slot according to sidelink numerology is added to a time when SFN is 0.

18. A second device configured to perform wireless communication, the second device comprising:

at least one memory storing instructions;
at least one transceiver; and
at least one processor connected to the at least one memory and the at least one transceiver, wherein the at least one processor executes the instructions to:

control the at least one transceiver to receive, from a first device, a PSCCH through a sidelink transmission resource determined based on RRC configuration information related to a sidelink CG resource; and
control the at least one transceiver to receive, from the first device, a PSSCH related to the PSCCH through the sidelink transmission resource,
wherein the RRC configuration information is transmitted from the base station and received by the first device,
wherein the RRC configuration information includes a timing offset for determining a first sidelink CG slot and a sidelink resource period of sidelink CG slots periodically allocated by the base station, and
wherein the sidelink transmission resource is determined in a unit of a logical slot based on the timing offset and the sidelink resource period.

19. The second device of claim 18, wherein the first sidelink CG slot is determined based on a first time when the timing offset in the unit of the logical slot according to sidelink numerology is added to a time when SFN is 0.

# FIG. 1

Evolution to 5G,
while maintaining backward compatibility

Advanced use cases
5G V2X R16

Enhanced safety
C-V2X R14/15

Higher throughput

Higher reliability

Wideband raging
and positioning

Lower latency

Basic safety
802.11p or C-V2X R14

Enhanced range and reliability

| Vehicle Platooning | Extended Sensors |
| Remote Driving | Advanced Driving |

# FIG. 2

# FIG. 3

**gNB**
- Inter-cell RRM
- RB control
- Connection Mobility Control
- Radio Admission Control
- Measurement Configuration & Provision
- Dynamic Resource Allocation (Scheduler)

NG-RAN

**AMF**
- NAS security
- Idle state mobility processing

**UPF**
- Mobility Anchoring
- PDU processing

5GC

**SMF**
- UE IP address allocation
- PDU session control

Internet

EP 4 090 089 A1

# FIG. 4A

```
┌ ─ ─ ─ ─ ─ ─ ─ ─ ─ ┐   ┌ ─ ─ ─ ─ ─ ─ ─ ─ ─ ┐
│ UE                │   │ gNB               │
│   ┌─────────┐     │   │   ┌─────────┐     │
│   │  SDAP   │◄────┼───┼──►│  SDAP   │     │
│   └─────────┘     │   │   └─────────┘     │
│   ┌─────────┐     │   │   ┌─────────┐     │
│   │  PDCP   │◄────┼───┼──►│  PDCP   │     │
│   └─────────┘     │   │   └─────────┘     │
│   ┌─────────┐     │   │   ┌─────────┐     │
│   │   RLC   │◄────┼───┼──►│   RLC   │     │
│   └─────────┘     │   │   └─────────┘     │
│   ┌─────────┐     │   │   ┌─────────┐     │
│   │   MAC   │◄────┼───┼──►│   MAC   │     │
│   └─────────┘     │   │   └─────────┘     │
│   ┌─────────┐     │   │   ┌─────────┐     │
│   │   PHY   │◄────┼───┼──►│   PHY   │     │
│   └─────────┘     │   │   └─────────┘     │
└ ─ ─ ─ ─ ─ ─ ─ ─ ─ ┘   └ ─ ─ ─ ─ ─ ─ ─ ─ ─ ┘
```

# FIG. 4B

# FIG. 5

· · · | One Frame (10ms) | · · ·

· · · | Half-Frame (5ms) | Half-Frame (5ms) | · · ·

· · · | Subframe 0 (1ms) | · · · | Subframe 4 (1ms) | Subframe 5 (1ms) | · · · | Subframe 9 (1ms) | · · ·

Subframe (1ms)

| 15KHz | Slot 0 (14symbols) |
|---|---|

1ms

| 30KHz | Slot 0 (14symbols) | Slot 1 |
|---|---|---|

500us

| 60KHz | Slot 0 (14symbols) | Slot 1 | Slot 2 | Slot 3 |
|---|---|---|---|---|

250us

| 120KHz | Slot 0 (14symbols) | Slot 1 | Slot 2 | Slot 3 | Slot 4 | Slot 5 | Slot 6 | Slot 7 |
|---|---|---|---|---|---|---|---|---|

125us

# FIG. 6

Resource grid

A carrier
(up to 3300 subcarriers,
i.e., 275 RBs)

A BWP

1RB=12 subcarriers

1 subcarrier

1 RE

1 symbol

k=0

l=0 ...

# FIG. 7

PRB N3

PRB 1
PRB 0

$N_{BWP,2}^{size}$

PRB N2

PRB 1
PRB 0

$N_{BWP,1}^{size}$

PRB N1

PRB 1
PRB 0

$N_{BWP,0}^{size}$

$N_{BWP,2}^{start}$

$N_{BWP,1}^{start}$

$N_{BWP,0}^{start}$

Carrier Bandwidth

Freq.

CRB 0

Time

PRB 0 (Point A) in reference resource block

# FIG. 8A

| UE A | | UE B |
|------|---|------|
| SDAP | ←→ | SDAP |
| PDCP | ←→ | PDCP |
| RLC | ←→ | RLC |
| MAC | ←→ | MAC |
| PHY | ←→ | PHY |

PC5-U

# FIG. 8B

# FIG. 9

BS(e.g. eNB or gNB)

UE 1　　　　　　　　　　　　　　　　UE 2

# FIG. 10A

# FIG. 10B

# FIG. 11A

●: TX UE

⊘: RX UE

# FIG. 11B

● : TX UE

⊘ : RX UE

# FIG. 11C

●: TX UE

⊘: RX UE

# FIG. 12

configured grant period

| No PSCCH/ PSSCH | | No PSCCH/ PSSCH | | No PSCCH/ PSSCH | | | No PSFCH | | | ACK on PUCCH |

# FIG. 13

EP 4 090 089 A1

# FIG. 14

BS     first device     second device

receive RRC configuration information
related to a sidelink CG resource — S1410

transmit PSCCH through sidelink
transmission resource determined
based on RRC configuration information — S1420

transmit PSSCH related to PSCCH through
sidelink transmission resource — S1430

EP 4 090 089 A1

# FIG. 15

```
┌─────────────────────────────────────────┐
│  receive RRC configuration information related │ ⟋S1510
│    to sidelink CG resource from base station   │
└─────────────────────────────────────────┘
                      │
                      ▼
┌─────────────────────────────────────────┐
│ transmit PSCCH to second device through sidelink │ ⟋S1520
│        transmission resource determined          │
│      based on RRC configuration information       │
└─────────────────────────────────────────┘
                      │
                      ▼
┌─────────────────────────────────────────┐
│ transmit PSSCH related to PSCCH to second device │ ⟋S1530
│     through sidelink transmission resource       │
└─────────────────────────────────────────┘
```

# FIG. 16

receive PSCCH from first device through sidelink
transmission resource determined based on
RRC configuration information related to sidelink CG resource — S1610

receive PSSCH related to PSCCH
from first device through sidelink transmission resource — S1620

# FIG. 17

# FIG. 18

EP 4 090 089 A1

# FIG. 19

1000(102/106, 202/206)

codewords

layers

antenna ports

1010 — Scrambler → 1020 — Modulator →

1030 — Layer Mapper → 1040 — Precoder → 1050 — Resource Mapper → 1060 — Signal Generator →

1010 — Scrambler → 1020 — Modulator →

1050 — Resource Mapper → 1060 — Signal Generator →

# FIG. 20

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

EP 4 090 089 A1

# FIG. 21

100

140a

Power supply unit

108

110

120

130

Communication unit

Control unit

Memory unit

140c

I/O unit

Display

Interface unit

140d

140b

# FIG. 22

Car or autonomous vehicle
(100)

Communication unit
(110)

Control unit
(120)

Memory unit
(130)

Driving unit
(140a)

Power supply unit
(140b)

Sensor unit
(140c)

Autonomous driving unit
(140d)

108

208

Device
(100, 200)

Communication unit
(210)

Control unit
(220)

Memory unit
(230)

Driving unit
(140a)

Power supply unit
(140b)

Sensor unit
(140c)

Autonomous driving unit
(140d)

EP 4 090 089 A1

## INTERNATIONAL SEARCH REPORT

| International application No. |
| --- |
| **PCT/KR2021/001602** |

**A. CLASSIFICATION OF SUBJECT MATTER**

**H04W 56/00**(2009.01)i; **H04W 72/14**(2009.01)i; **H04W 72/12**(2009.01)i; **H04W 72/04**(2009.01)i; **H04W 4/40**(2018.01)i; **H04W 92/18**(2009.01)i

According to International Patent Classification (IPC) or to both national classification and IPC

**B. FIELDS SEARCHED**

Minimum documentation searched (classification system followed by classification symbols)

H04W 56/00(2009.01); H04L 1/00(2006.01); H04L 1/18(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: V2X, sidelink, SL mode-1 CG type-1, CG(configured grant), RRC, timing offset, period, logical slot, TA(timing advance)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | LG ELECTRONICS. Discussion on NR sidelink resource allocation for Mode 1. R1-1912587, 3GPP TSG RAN WG1 #99 Meeting. Reno, US. 17 November 2019.<br>See sections 2.1 and 2.4. | 1-2,13-19<br>5-6<br>3-4,7-12 |
| Y | HUAWEI et al. Sidelink resource allocation mode 1. R1-1911883, 3GPP TSG RAN WG1 Meeting #99. Reno, USA. 17 November 2019.<br>See sections 2.2-2.3. | 5 |
| Y | WO 2017-171390 A1 (LG ELECTRONICS INC.) 05 October 2017 (2017-10-05)<br>See paragraphs [0097] and [0112]; and figure 12. | 6 |
| A | APPLE. On Mode 1 Resource Allocation. R1-1912811, 3GPP TSG RAN WG1 #99. Reno, USA. 17 November 2019.<br>See section 2. | 1-19 |

☑ Further documents are listed in the continuation of Box C.  ☑ See patent family annex.

| | | |
| --- | --- | --- |
| \* | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
| --- | --- |
| **04 May 2021** | **06 May 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2021/001602** |

**C.     DOCUMENTS CONSIDERED TO BE RELEVANT**

| Category* | Citation of document, with indication, where appropriate, of the relevant passages | Relevant to claim No. |
|---|---|---|
| A | KR 10-2018-0033589 A (LG ELECTRONICS INC.) 03 April 2018 (2018-04-03)<br>See paragraphs [0178]-[0183]; and figure 10. | 1-19 |

Form PCT/ISA/210 (second sheet) (July 2019)

**INTERNATIONAL SEARCH REPORT**
Information on patent family members

| International application No. |
| --- |
| **PCT/KR2021/001602** |

| Patent document cited in search report | | | Publication date (day/month/year) | Patent family member(s) | | | Publication date (day/month/year) |
| --- | --- | --- | --- | --- | --- | --- | --- |
| WO | 2017-171390 | A1 | 05 October 2017 | US | 10624113 | B2 | 14 April 2020 |
| | | | | US | 2019-0124673 | A1 | 25 April 2019 |
| KR | 10-2018-0033589 | A | 03 April 2018 | CN | 108028730 | A | 11 May 2018 |
| | | | | CN | 108028730 | B | 04 December 2020 |
| | | | | EP | 3352402 | A1 | 25 July 2018 |
| | | | | EP | 3352402 | B1 | 20 January 2021 |
| | | | | JP | 2018-528736 | A | 27 September 2018 |
| | | | | JP | 2020-109984 | A | 16 July 2020 |
| | | | | JP | 6672463 | B2 | 25 March 2020 |
| | | | | US | 10536958 | B2 | 14 January 2020 |
| | | | | US | 2019-0045526 | A1 | 07 February 2019 |
| | | | | US | 2020-0112977 | A1 | 09 April 2020 |
| | | | | WO | 2017-048109 | A1 | 23 March 2017 |

Form PCT/ISA/210 (patent family annex) (July 2019)